Europäisches Patentamt

European Patent Office

Office européen des brevets

(19)

(11) Publication number:

**0 319 761**
**A2**

# (12) EUROPEAN PATENT APPLICATION

(21) Application number: 88119350.2

(22) Date of filing: 21.11.88

(51) Int. Cl.⁴: G06F 1/04

(30) Priority: 11.12.87 US 132205

(43) Date of publication of application:
14.06.89 Bulletin 89/24

(84) Designated Contracting States:
DE FR GB IT

(71) Applicant: COMPUTER CONSOLES
INCORPORATED (a Delaware corporation)
9801 Muirlands Boulevard
Irvine California 92718-2521(US)

(72) Inventor: Johnson, Larry D.
25931 El Segundo
Laguna Hills California 92653(US)
Inventor: Troutman, Bruce L.
24171 Hurst
El Toro California 92630(US)

(74) Representative: Meddle, Alan Leonard et al
FORRESTER & BOEHMERT
Widenmayerstrasse 4/I
D-8000 München 22(DE)

(54) Multi-phase clock circuitry.

(57) Circuitry for defining a multi-phase clock having a clock rate determined by a reference clock signal comprises a phase locked loop (15) driven by the reference clock signal. The phase locked loop has feedback path including multi-cell means (21, 23) for providing an accumulated multi-bit adjustment count, and a feed forward path including a plurality of discretely adjustable delay circuit stages (7,9, 11, 13) for producing a plurality of phase-boundary-defining signals under the control of the accumulated adjustment count. The circuitry further comprises circuit means (25) responsive to the phase-boundary-defining signals for producing parallel pulse signals that in combination define the multi-phase clock.

FIG. 1

EP 0 319 761 A2

## MULTI-PHASE CLOCK CIRCUITRY

In general, this invention relates to circuitry for producing clocking signals; more particularly, it relates to circuitry for defining a multi-phase clock for a digital integrated circuit chip.

In a digital integrated circuit chip, a multi-phase clock is distributed throughout the chip to regulate detailed signal-transfer operations and prevent propagation delays of gates and other circuit latencies from introducing errors. A multi-phase clock is defined by a group of parallel pulse signals, all having the same pulse rate, but staggered in time to define a succession of time slots or phases within every cycle of the multi-phase clock.

Over the years, there have been enormous improvements in integrated-circuit fabrication technology that have reduced the propagation delays associated with devices in a chip. One of the reasons that the devices in a chip can operate with very high speed in that they are small and close to each other, and thus are less constrained by the effects of distributed inductance and capacitance than are discrete components off chip.

The speed of devices fabricated using state-of-the-art digital integrated-circuit fabrication technology is such that it is now practical for a Complementary Symmetry Metal Oxide Semiconductor (CMOS) logic element such as an inverter to introduce as little as about 0.4 nanoseconds (nsec) nominal propagation delay. To take advantage of the increased speed of such devices, it is desirable to define a higher clock rate and correspondingly decreased-duration time slots or phases.

A prior art approach for defining a multi-phase clock is disclosed in an article titled "Design of PLL-Based Clock Generation Circuits," by Jeong et al., published in IEEE Journal of Solid State Circuits, Vol. SC-22, No. 2, April 1987. This article describes the design of circuitry for defining a 4-phase clock for use as part of a microprocessor chip set. This prior art design is based on a phase locked loop (PLL) that incorporates a variable-frequency ring oscillator that is controlled by an analog (continuously variable) voltage. The phase locked loop includes a conventional phase detector referred to in the cited article as a PFD (an acronym for Phase-Frequency Detector). The PFD compares a reference signal with a feedback signal from the ring oscillator to produce a loop error signal. A charge pump and loop filter use the loop error signal to produce the continuously variable voltage. The ring oscillator includes nine delay cells each of which provides a continuously variable delay under control of the continuously variable voltage produced by the loop filter. This article reports that experiments have shown that circuitry according to this design can be used to generate a 4-phase clock with a clock rate as high as 18 megahertz (MHz).

There are numerous shortcomings and complexities involved in the foregoing prior art design that are representative of shortcomings and complexities involved in prior art circuitry generally. In this regard, there are disadvantages involved with the loop filter in that as disclosed it comprises an off-chip resistor and capac itor. The off-chip resistor plays a critical role in stabilizing the phase locked loop. If the resistance value of the off-chip resistor is too high or too low, the phase locked loop is unstable.

In this regard, there will be circumstances in which the oscillation rate of the ring oscillator differs from the oscillation rate of the reference signal. Such circumstances are essentially inevitable for the initial operation of the phase locked loop upon application of power. In circumstances in which the oscillation rate of the ring oscillator is too high, the error signal needs to change in a direction to reduce that oscillation rate. Unfortunately, the error signal is subject to overshoot, whereby it changes so much that the oscillation rate of the ring oscillator is reduced to the point that it is too low (i.e., less than the oscillation rate of the reference signal). In circumstances in which the oscillation rate of the ring oscillator is too low (because, e.g., error-signal overshoot occurred), the error signal needs to change in the opposite direction to increase that oscillation rate. Again, the error signal is unfortunately subject to overshoot, whereby it changes so much that the oscillation rate of the ring oscillator is increased to the point that it is too high. Unless the resistance and capacitance values of the off-chip loop filter are within predetermined limits, the ring oscillator will cyclically speed up and slow down.

The lower limit imposed on that resistance value for the purpose of ensuring loop stability has an undesirable effect with respect to noise. In this regard, the loop filter, being off-chip, is subject to external noise and can undesirably introduce such external noise into the chip. Further, noise riding on the continuously variable control voltage is applied to each of the continuously variable delay elements of the ring oscillator. The foregoing problems become matters of increasing concern as efforts are made to expand the range of operation of this circuitry to provide a higher-rate clock.

As indicated by the foregoing background, there is a substantial need, in the context of a digital integrated circuit chip that requires a multi-phase clock, for circuitry embodying improvements making it practical to define a high clock rate to take substantially full advantage of the speed of state-of-the-art devices and making the circuitry substantially less subject to noise.

This invention provides new and advantageous circuitry that embodies numerous improvements over prior art oircuitry used for performing timing functions involved in a phase locked loop.

From one aspect, the invention is regarded as residing in a circuit combination comprising phase-locked-loop circuitry and decoding circuitry that cooperate to define a multi-phase clock having a clock rate determined by a reference clock signal. The phase-locked-loop circuitry is driven by the reference clock signal, and includes a feed-forward path and a feedback path. The feedback path includes multi-cell means for providing an accumulated multi-bit adjustment count. The feed-forward path includes a plurality of discretely adjustable delay circuit stages for producing a plurality of phase-boundary-defining signals under control of the accumulated adjustment count. The decoding circuitry responds to the phase-boundary-defining signals to produce parallel pulse signals that in combination define the multi-phase clock.

From another aspect, the invention is regarded as residing in integrated-circuit circuitry for responding to an input parallel signal that defines a count, and to an input serial signal that defines a pulse waveform, to produce an output serial signal that defines a delayed pulse waveform. The integrated-circuit circuitry comprises a plurality of circuit elements for selectively loading a node. In the preferred embodiment, the loading each of these circuit elements provides is determined by the per-element input capacitance of these circuit elements, whereby the capacitive load on the node is discretely adjustable.

The integrated-circuit circuitry further includes multiplexing means, signal propagating means, and threshold-setting circuit means. The multiplexing means responds to the input parallel signal to load the node with a selected set of the circuit elements. The signal propagating circuit means responds to the input serial signal to drive the node to produce a node signal that undergoes an excursion during an interval that is a staircase function of the number of circuit elements in the selected set. The threshold-setting circuit means responds to the node signal to produce the output serial signal. In accord with a highly advantageous organization, a delay circuit stage comprises two sub-stages each of which defines a sub-stage delay on the basis of a respective node signal as described immediately above. In combination, the sub-stages provide that the delay from an edge of the stage-input serial signal to the resulting edge of the stage output serial signal is essentially the same for rising and falling edges.

From another aspect, the invention is regarded as residing in a multi-state-controlled circuit arrangement for defining a multi-phase clock. The circuit arrangement comprises circuit means for producing a phase-reference pulse signal, delay-circuit means, storage means, phase-error-determining means, multi-state controller means, and decoding circuit means. The storage means has input means operable to integrate an error signal to produce a stored-delay-control signal, and has output means for providing the stored-delay-control signal. The delay-circuit means is activated by the phase-reference pulse signal and controlled by the stored-delay-control signal to produce a plurality of time-staggered pulse signals including a feedback pulse signal. The phase-error-determining means includes phase-difference-detecting means operable to compare the phase-reference pulse signal with the feedback pulse signal to produce a sampled error signal, and holding means for providing the sampled error signal to the input means of the storage means. The use of the phase-reference signal for both the function of cooperating in the comparison operation of the phase-difference-detecting means and the function of activating the delay means is a particularly advantageous feature not found in a prior art arrangement involving an autonomously operating oscillator such as the ring oscillator described above. Another such advantageous and distinguishing feature resides in the multi-state controller means, which comprises means for defining a sequence of timing windows including an evaluation window and an integration window, and comprises means for operating the phase-difference-detecting means during the evaluation window, and means for operating the input means of the storage means during the integration window. The decoding circuit means responds to a plurality of the time-staggered pulse signals to produce parallel pulse signals that in combination define the multi-phase clock.

In order that the invention may be more readily understood, an embodiment thereof will now be described, by way of example, with reference to the accompanying drawings, in which:

FIG. 1 is a block diagram of the preferred embodiment of the invention, and shows the overall organization of circuitry for defining a multi-phase clock having a clock rate determined by a reference clock signal;

FIG. 2 is a timing diagram showing, on a time scale covering several cycles of the multi-phase clock, the general timing relationships among certain pulse signals, including phase-boundary-defining pulse signals and including parallel pulse signals that in combination define the multi-phase clock;

3

FIG. 3 is a block and schematic diagram relating to a discretely adjustable delay stage that, as generally shown in FIG. 1, is replicated to provide a multi-stage arrangement used in the preferred embodiment to produce phase-boundary-defining signals, and shows a portion selected for reference in describing the minimum discrete adjustment of propagation delay for the delay element;

FIG. 4 is a block and schematic diagram relating to the circuitry for implementing each discretely adjustable delay stage, and shows a portion constituting a first sub-stage;

FIG. 5 is a block and schematic diagram relating to the circuitry for implementing each discretely adjustable delay stage, and shows a portion constituting a second sub-stage;

FIG. 6 is a logic-level diagram of the resettable phase detector (RPD 17) shown in the block diagram of FIG. 1;

FIG. 7 is a logic-level diagram of a portion of the circuitry for performing the functions of the decoder 25 shown in FIG. 1;

FIG. 8 is a logic-level diagram of the remaining portion of the circuitry of decoder 25 shown in FIG. 1;

FIG. 9 is a block and logic-level diagram showing the overall organization of the multi-state controller 19 shown in FIG. 1;

FIG. 10 is a timing diagram showing, on a time scale covering eight cycles of the multi-phase clock, the general timing relationships among certain pulse signals including pulse signals involved in defining timing windows;

FIG. 11 is a logic-level diagram of·circuitry for performing the functions of the ADD/SUBTRACT latch (ASLAT 233) shown in FIG. 9;

FIG. 12 is a block and logic-level diagram of circuitry for performing the functions of the count accumulator 21 shown in FIG. 1;

FIG. 13 is a logic-level diagram of circuitry for performing the functions of one type of logic arrangement that is replicated as shown in FIG. 12 to produce signals, including a carry-out signal, used in operations to increment and to decrement a stored count;

FIG. 14 is a logic-level diagram of circuitry for performing the functions of another type of logic arrangement that is replicated as shown in FIG. 12 to produce signals, including a carry-out signal, used in the operations to increment and to decrement the stored count;

FIG. 15 is a block and logic-level diagram of a multi-cell latch arrangement of which two are provided to implement the adjustment-count latches 23 of FIG. 1;

FIG. 16 is a logic-level diagram of a standard latch cell that is replicated as shown in FIG. 15; and

FIG. 17 is a logic-level diagram of a reset delay circuit arrangement included in the multi-state controller.

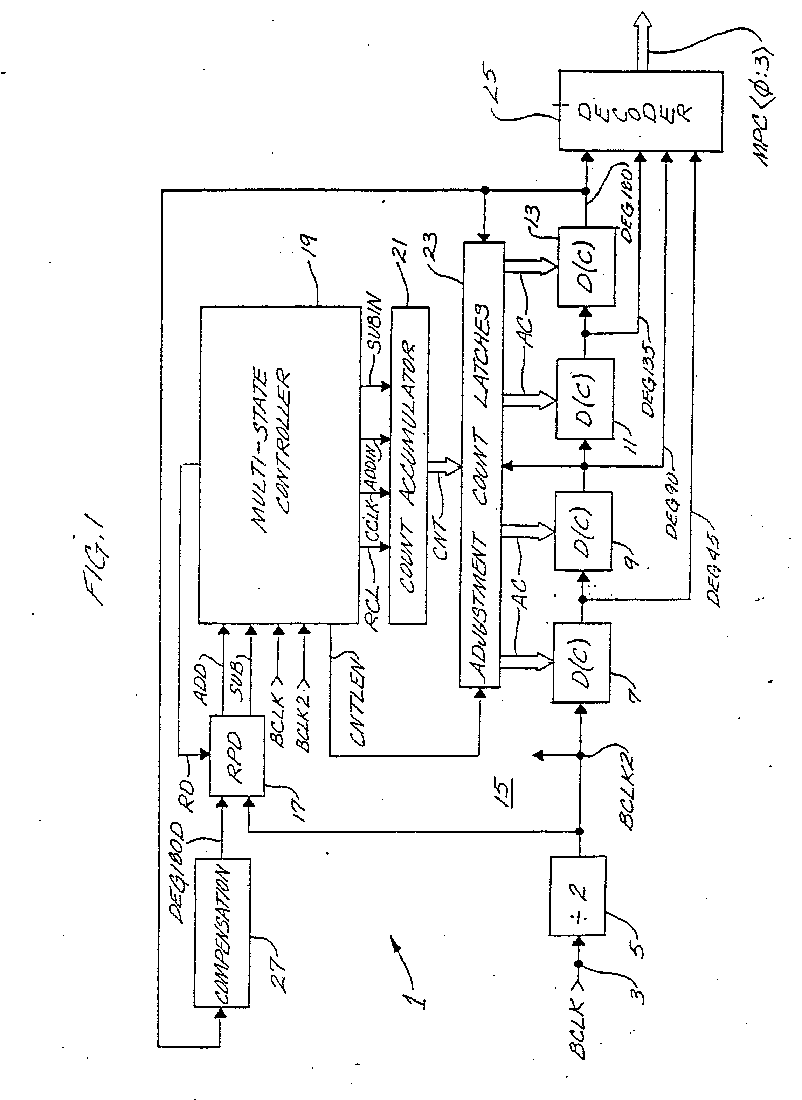

With reference to the block diagram of FIG. 1, there will now be described the overall organization of multi-phase clock circuitry 1 which constitutes the preferred embodiment of this invention. While a rate-determining clock signal (BCLK) is applied, circuitry 1 produces a four-phase clock comprising four parallel pulse signals that are collectively designated in FIG. 1 as MPC<0:3>. In the preferred embodiment, these four parallel pulse signals are distributed throughout a digital integrated circuit chip used as an instruction processor chip of a CPU chip set. Preferably, the instruction processor chip is implemented in 1.2 micron CMOS technology.

The BCLK signal is generated by conventional crystal oscillator circuitry and applied to a terminal 3 of the chip. One of the advantages of circuitry 1 is that all of it is contained within the chip to respond to the supplied BCLK signal to produce the multi-phase clock. Another advantage is that a very high clock rate can be used. In a specific embodiment, the clock rate, which is determined by the pulse rate of the BCLK signal, can be higher than 33 MHz and, preferably, is approximately 50 MHz.

At such a high clock rate, the duty cycle of the BCLK signal is subject to significant variation. A divide-by-two circuit 5, suitably implemented as a conventional D-type CMOS flip flop, is triggered by each rising edge of the BCLK signal to produce a BCLK2 pulse signal whose duty cycle is not subject to such variation.

The BCLK2 signal activates delay circuit means comprising four delay circuit stages 7, 9, 11, and 13 that are connected in tandem to form a feed-forward path of a phase lock loop generally indicated at 15. These delay circuit stages produce four phase-boundary-defining signals designated herein as a DEG45 signal, a DEG90 signal, a DEG135 signal, and a DEG180 signal.

In addition to activating the delay circuit means, the BCLK2 signal provides a phase-reference pulse signal as an input to a resettable phase detector (RPD 17). A pulse signal designated as DEG180D provides a feedback pulse signal to RPD 17. A logic control signal designated RD is provided to RPD 17 from a multi-state controller 19. The RD control signal provides alternately for maintaining RPD 17 in a reset condition and for enabling RPD 17 to cooperate with multi-state controller 19 in performing a sample and hold operation. During the sample and hold operation, ADD and SUB signals produced by RPD 17 are used by latches within multi-state controller 19 that hold a sampled error signal comprising an ADDIN signal and a SUBIN signal.

Multi-state controller 19 comprises circuitry which is described fully below with reference to logic-level diagrams and which provides means for defining a plurality of timing windows, including an evaluation window and an integration window each of which occurs once every eight cycles of the BCLK signal. During each evaluation window, the DEG180D signal has a falling edge, and the BCLK2 signal also has a falling edge. The relative order in which these falling edges occur provides information as to the relative phases of the DEG180D and BCLK2 signals.

If the DEG180D signal leads the BCLK2 signal by an amount in excess of a dead-zone threshold, then during the evaluation interval, the ADDIN signal is latched high and the SUBIN signal is latched low. If the DEG180D signal lags the BCLK2 signal by an amount in excess of the dead-zone threshold, then during the evaluation interval, the SUBIN signal is latched high and the ADDIN signal is latched low. If the DEG180D signal and the BCLK2 signal have the same or approximately the same phase during the evaluation window, then both the ADDIN and SUBIN signals are latched low.

A count accumulator 21 comprises a register for storing a count and means operated during the integration window to increment the stored count if the ADDIN signal is high and to decrement the stored count if the SUBIN signal is high. Multi-state controller 19 provides several signals to count accumulator 21. These several signals include the ADDIN and SUBIN signals. Another of these several signals is a CCLK signal that, during the integration window, provides a positive pulse to cause count accumulator 21 to integrate, i.e., to increment if the ADDIN signal is then high or to decrement if the SUBIN signal is then high. Another of these signals is a RCL signal that, while low incident to a start-up operation, holds the register within count accumulator 21 in a reset state.

A set of adjustment-count latches 23 are coupled between count accumulator 21 and multi-bit adjustment-count inputs of delay stages 7, 9, 11, and 13. Multi-state controller 19 produces a count latch enable signal (CNTLEN) that, while high, participates in enabling adjustment-count latches 23 to copy the stored count provided by count accumulator 21, save it, and supply it as the multi-bit adjustment count. The DEG90 and DEG180 signals also participate in enabling such copying operations.

The delay associated with each of these delay stages is a staircase function of the multi-bit adjustment count. In the preferred embodiment, the multi-bit adjustment count is defined by six pairs of complementary signals, one pair for each of six bits. These signals are collectively designated herein as ACH<5:O> and ACL<5:O>. Six parallel bits correspond to a range from decimal 0 to decimal 63. The delay is a minimum for decimal 0 and increases step-by-step to a maximum for decimal 63.

As indicated above, the value of the adjustment count is repeatedly determined at the instant of each copying operation by the value of count stored in the register within count accumulator 21. Six signals provided by that register are collectively designated herein as CNT<5:O>. Except for each brief interval following an incrementation or decrementation of the stored count and preceding the stored count being copied, the adjustment count signals ACH<5:O> are identical to the stored count signals CNT<5:O>.

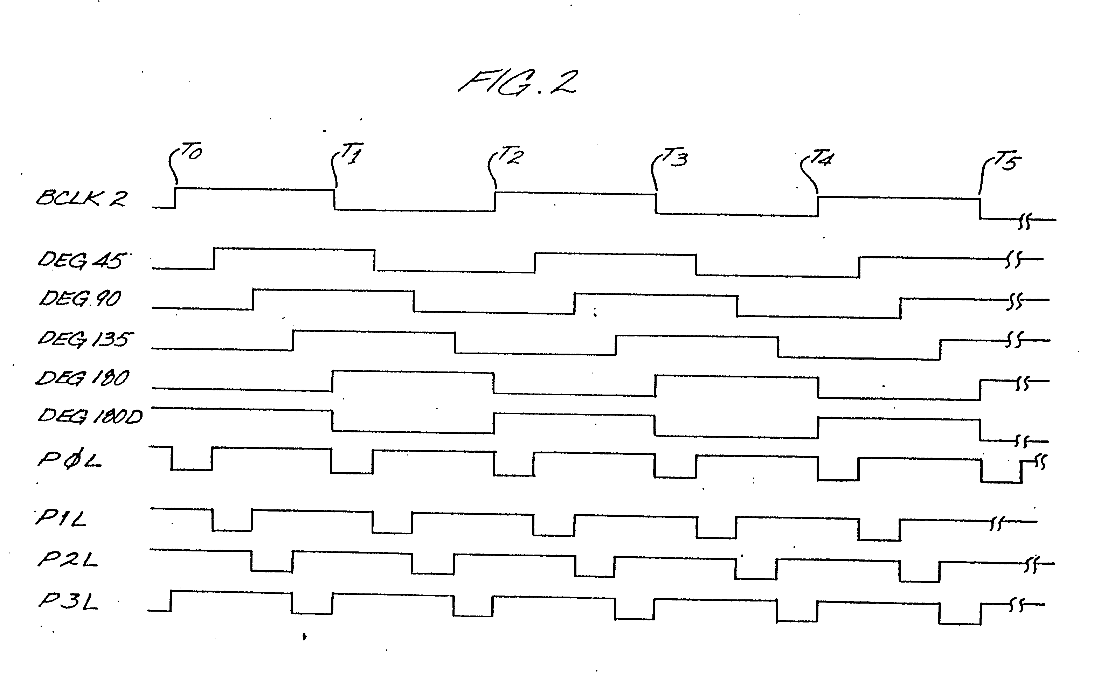

A decoder 25 decodes the four phase-boundary-defining signals to produce the multi-phase clock MPC<O:3>, which comprises four parallel pulse signals, POL, P1L, P2L, and P3L, which are depicted in the timing diagram of FIG. 2.

The timing diagram of FIG. 2 has a time scale covering several clock cycles of the multi-phase clock and depicts general timing relationships. Along its top, FIG. 2 shows the general features of the waveform of the BCLK2 signal, which has a rising edge at time $T_0$, a falling edge at time $T_1$, and so forth.

Just below the waveform for the BCLK2 signal, FIG. 2 depicts the waveform for the DEG45 signal. The rising edge of the BCLK2 signal that occurs at time $T_0$ causes the next ensuing rising edge of the DEG45 signal. Similarly, the falling edge of the $BCLK_2$ signal that occurs at time T1 causes the next ensuing falling edge of the DEG45 signal. The delay between the corresponding edges is discretely adjusted in accord with the value of the multi-bit adjustment count applied to the delay stage 7.

The DEG45 signal drives delay stage 9 to produce the DEG90 signal in the same way that the BCLK2 signal drives delay stage 7 to produce the DEG45 signal. The same is true for the response of delay stage 11 to the DEG90 signal to produce the DEG135 signal, and for the response of delay stage 13 to the DEG135 signal to produce the DEG180 signal. A compensator circuit arrangement 27, suitably implemented by five tandem-connected inverters, responds to the DEG180 signal to produce the DEG180D signal. The Decoder Truth Table set forth below defines the mapping between low and high conditions of the phase-boundary-defining signals and the particular phase of the multi-phase clock which is concurrently asserted (low).

5

| DECODER TRUTH TABLE | | | | |
|---|---|---|---|---|
| DEG180 | DEG135 | DEG90 | DEG45 | PHASE |
| L | L | L | L | P0 |
| L | L | L | H | P1 |
| L | L | H | H | P2 |
| L | H | H | H | P3 |
| H | H | H | H | P0 |
| H | H | H | L | P1 |
| H | H | L | L | P2 |
| H | L | L | L | P3 |

As indicated by the foregoing truth table and also by the timing diagram of FIG 2, each edge of the DEG45 signal establishes the boundary between phase P0 and phase P1; each edge of the DEG90 signal establishes the boundary between phase P1 and phase P2; each edge of the DEG135 signal establishes the boundary between phase P2 and phase P3; and each edge of the DEG180 signal establishes the boundary between phase P3 and phase P0. The pulse rate of each of these signals is determined directly by the oscillation rate of the BCLK2 signal (and, ultimately, by the oscillation rate of the BCLK signal). Thus, none of these signals is subject to the problem of a cyclical speed up and slow down in rate in an unstable, overshooting manner as described above with respect to the prior art approach involving an autonomously operating oscillator.

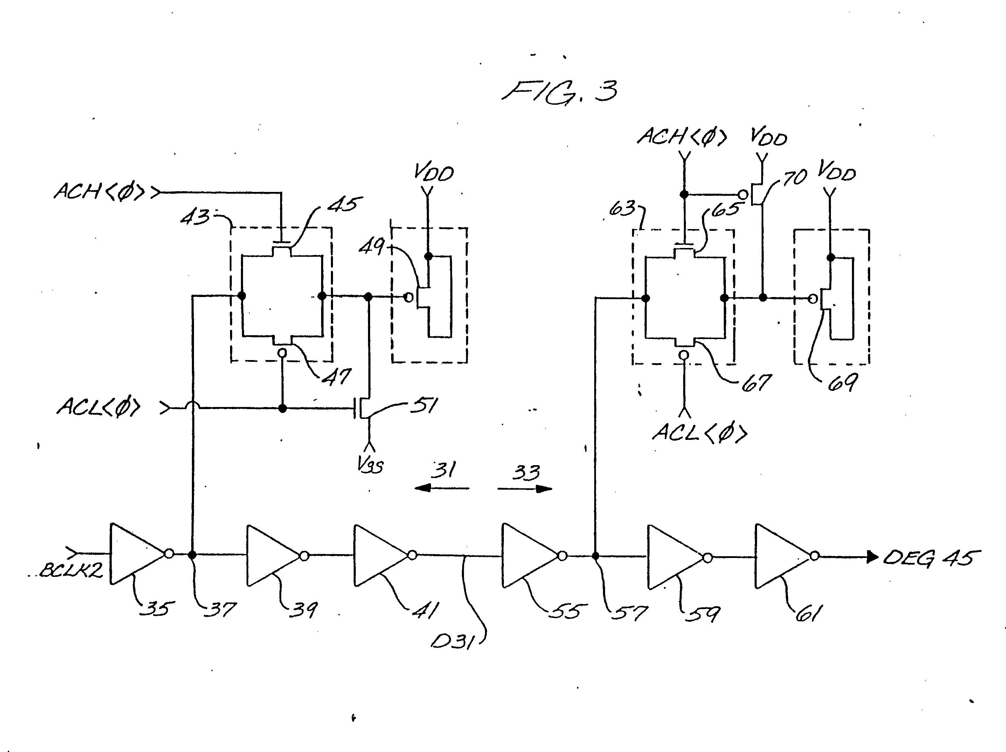

With reference to FIG. 3, there will now be described a portion of the circuitry within a representative one of the four delay stages, viz, delay stage 7, which responds to the BCLK2 signal to produce the DEG45 signal under control of the multi-bit adjustment count, of which only the least significant bit is shown in FIG. 3.

The delay stage comprises a sub-stage generally indicated at 31 that responds to the BCLK2 signal and produces a D31 pulse signal, and a tandem sub-stage generally indicated at 33 that responds to the D31 signal and produces the DEG45 signal. These sub-stages cooperate with each other such that the discretely adjustable delay between the falling edge of the BCLK2 signal and the falling edge of the DEG45 signal is the same or approximately the same as the discretely adjustable delay between the rising edge of the BCLK2 signal and the rising edge of the DEG45 signal. The delay between the falling edge of the BCLK2 signal and the resulting rising edge of the D31 signal is less than the delay between the rising edge of the BCLK2 signal and the resulting falling edge of the D31 signal. This difference is counterbalanced by the delay sub-stage 33. The delay between the rising edge of the D31 signal and the resulting falling edge of the DEG45 signal is more than the delay between the falling edge of the D31 signal and the resulting rising edge of the DEG45 signal.

In sub-stage 31, there is an inverter 35 that drives a node 37 that is selectively loaded by a discretely adjustable load. Inverter 35 is a conventional CMOS inverter comprising a p-type MOSFET and an n-type MOSFET.

As is well known, the switching characteristics of a p-type MOSFET are slightly different from those of an n-type MOSFET having the same geometry. In the preferred embodiment, the channel width of the p-type MOSFET in inverter 35 is twice the channel width of the n-type MOSFET (40 units versus 20 units). Because of this geometry, the p-type MOSFET has approximately the same ON-output impedance as the ON-output impedance of the n-type MOSFET. The nominal output impedance of inverter 35 is in the neighborhood of 1K ohm. Any capacitance that loads node 37 reduces the rate of change of the potential at node 37 during transient conditions caused by an edge of the BCLK2 signal. Depending upon how much capacitance loads node 37, the potential at node 37 changes more or less gradually during these transient conditions.

An inverter 39 has its input connected to node 37 and defines a threshold switching potential. An inverter 41 has its input connected to the output of inverter 39 and its output defines the output signal D31 of sub-stage 31. Whereas the changes in the potential at node 37 occur more or less gradually as set forth above, each change in the D31 output signal that results from that potential passing the threshold switching potential is essentially uniformly rapid because of the gain provided by inverters 39 and 41.

Because of differences in switching characteristics of n-type and p-type MOSFETs, the threshold switching potential defined by inverter 39 is offset from the midpoint of the range between $V_{DD}$ (typically $+5$ volts) and $V_{SS}$ (0 volts or ground). The threshold potential is approximately $+2$ volts. This offset is a factor involved in the difference between the propagation delays of sub-stage 31 for opposite edges of the BCLK2

6

signal. In other words, it takes longer for the potential at node 37 to discharge from approximately +5 volts to approximately +2 volts incident to a rising edge of the BCLK2 signal than to charge from approximately 0 volts to approximately +2 volts incident to a falling edge of the BCLK2 signal.

As to adjusting the loading of node 37, a transfer gate 43 shown in FIG. 3, is part of a multiplexing means for loading node 37 with a selected set of circuit elements. Transfer gate 43 comprises an n-type MOSFET 45 that has its gate connected to receive the ACH<O> signal, and a p-type MOSFET 47 that has its gate connected to receive the ACL<O> signal. The ACH<O> and ACL<O> signals are complementary and are one of the six pairs of complementary signals defining the multi-bit adjustment count.

A condition in which the ACH<O> signal is high and the ACL<O> signal is low is more briefly described as a condition in which bit 0 of the adjustment count is 1. A condition in which the ACH<O> signal is low and the ACL<O> signal is high is more briefly described as a condition in which bit 0 of the adjustment count is 0.

In circumstances in which bit 0 of the adjustment count is 1, transfer gate 43 provides a path through which current can flow either to charge up or to discharge the input capacitance of a p-type MOSFET 49.

In circumstances in which bit 0 of the adjustment count is 0, transfer gate 43 is open and isolates node 37 from the input capacitance of p-type MOSFET 49. Also under these circumstances, an n-type MOSFET 51 provides a discharge path to maintain the potential at the gate of p-type MOSFET 49 at the same potential as $V_{SS}$ (i.e., 0 volts or ground).

In sub-stage 33, there is an inverter 55 that drives a node 57 that is selectively loaded by a discretely adjustable load. Inverter 55, like inverter 35, is a conventional CMOS inverter having a nominal output resistance in the neighborhood of 1Kohm. Any capacitance that loads node 57 affects the rate at which the potential at node 57 can change incident to an edge of the output signal of sub-stage 31. An inverter 59 has its input connected to node 57 and defines a threshold switching voltage. An inverter 61 has its input connected to the output of converter 59 and its output defines the output signal (DEG45) of sub-stage 33.

As to adjusting the loading of node 57, a transfer gate 63 is part of a multiplexing means for loading node 57 with a selected set of circuit elements. Transfer gate 63 includes MOSFETs 65 and 67 arranged so that transfer gate 63 operates in the same way as transfer gate 43 under control of the complementary signals defining the least significant bit of the multi-bit adjustment count, i.e., ACH<O> and ACL<O>.

In circumstances in which bit 0 of the adjustment count is 1, transfer gate 63 provides a path through which current can flow either to charge up or to discharge the input capacitance of a p-type MOSFET 69.

In circumstances in which bit 0 of the adjustment count is 0, transfer gate 63 is open and isolates node 57 from the input capacitance of p-type MOSFET 69. Also under these circumstances, a p-type MOSFET 70 provides a charging path to maintain the potential at the gate of p-type MOSFET 69 at the same potential as $V_{DD}$ (i.e., +5 volts).

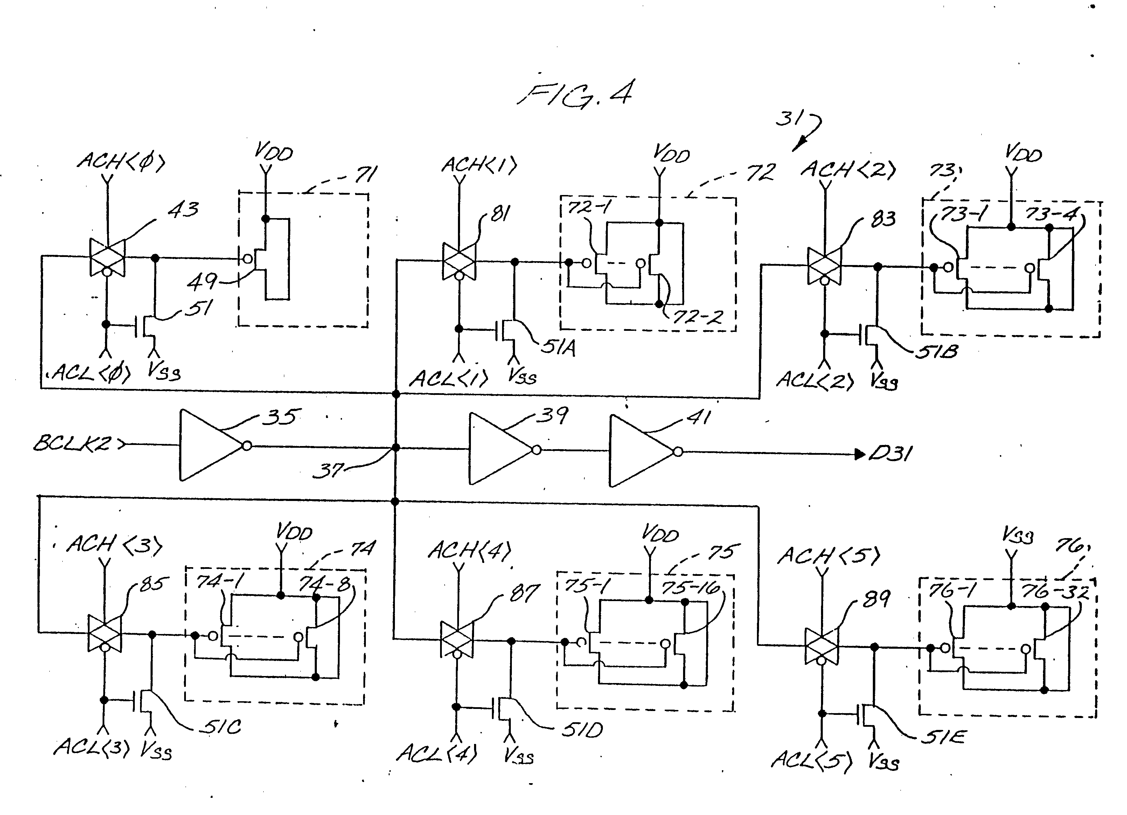

With reference to FIG. 4, there will now be described the remaining portion of delay sub-stage 31 and how the circuits of this remaining portion are connected to node 37. Sub-stage 31 has a total of 63 circuit elements for selectively loading node 37. These are divided into six sub-sets 71 through 76. Each sub-set is associated with a respective one of six transfer gates that provide a multiplexing means controlled by the multi-bit adjustment count defined by the six pairs of complementary signals ACH<5:O> and ACL<5:O>.

Sub-set 71 consists of a single element, viz, p-type MOSFET 49, and is associated with transfer gate 43 that is controlled by bit 0 of the adjustment count.

Sub-set 72 comprises two such elements, viz, p-type MOSFETs 72-1 and 72-2, and is associated with a transfer gate 81 that is controlled by bit I of the adjustment count. That is, the two elements of sub-set 71 load node 37 while the ACH<1> signal is high.

Sub-set 73 comprises four elements, 73-1 through 73-4, of which only two are shown in FIG. 4. A transfer gate 83 associated with sub-set 73 is controlled by bit 2 of the adjustment count. That is, the four elements of sub-set 72 load node 37 while the ACH<2> signal is high.

Sub-set 74 comprises eight elements, 74-1 through 74-8, of which only two are shown in FIG. 4. A transfer gate 85 associated with sub-set 74 is controlled by bit 3 of the adjustment count. That is, the eight elements of sub-set 74 load node 37 while the ACH<3> signal is high.

Sub-set 75 comprises 16 elements, 75-1 through 75-16, of which only two are shown in FIG. 4. A transfer gate 87 associated with sub-set 75 is controlled by bit 4 of the adjustment count. That is, the 16 elements of sub-set 75 load node 37 while the ACH<4> signal is high.

Sub-set 76 comprises 32 elements, 76-1 through 76-32, of which only two are shown in FIG. 4. A transfer gate 89 associated with sub-set 76 is controlled by bit 5 of the adjustment count. That is, the 32 elements of sub-set 76 load node 37 while the ACH<5> signal is high.

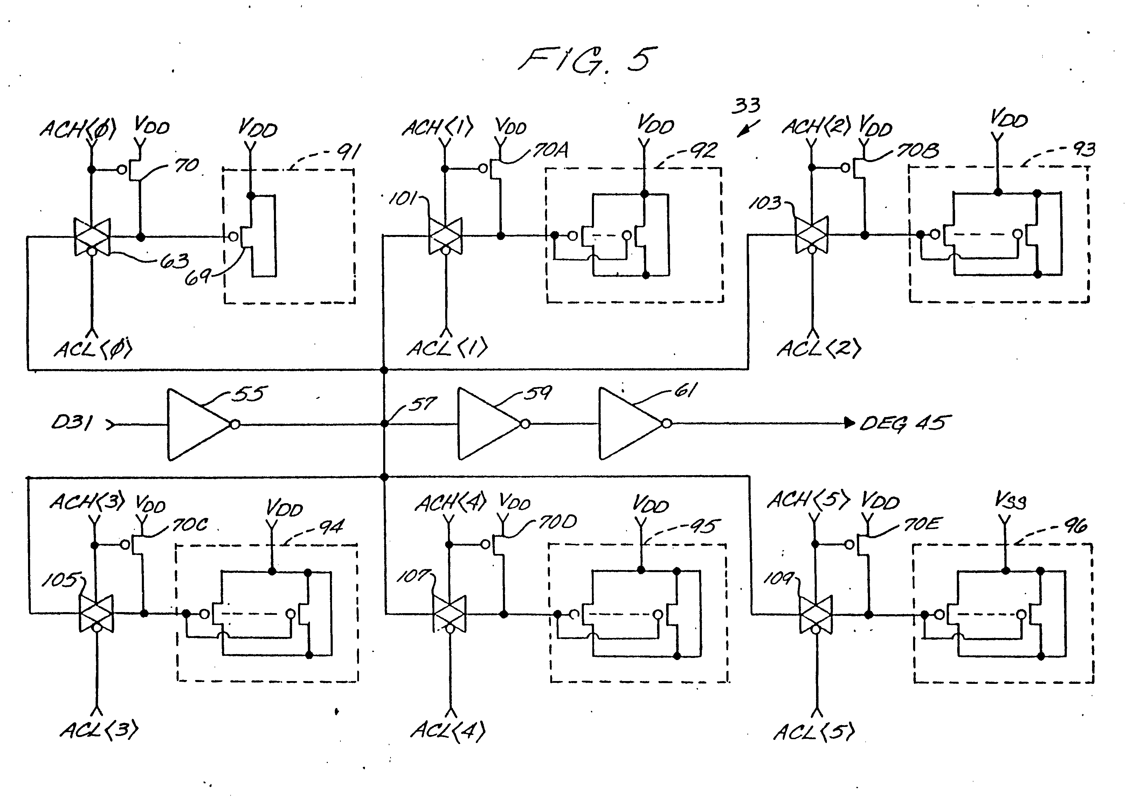

As shown in FIG. 5, sub-stage 33 has almost the same construction as sub-stage 31, except that it incorporates p-type MOSFETs 70, 70A, 70B, etc., through 70E, whereas sub-stage 31 incorporates n-type MOSFETs 51, 51A, 51B, etc., through 51E.

In this regard, a possible circumstance of operation can involve a change, incident to copying of a new stored count, whereby the adjustment count changes from a count of decimal 32 to a count of decimal 31. For decimal 32, the binary value of the adjustment count is 100000. For this count, sub-set 96 in sub-stage 33 loads node 57, whereas none of the other sub-sets 91 through 95 loads node 57. Similarly, sub-set 76 in sub-stage 31 loads node 37, whereas none of the other sub-sets 71 through 75 loads node 37.

With reference to FIG. 5, when the count changes from decimal 32 to decimal 31 (i.e., the binary value for the adjustment count becomes 011111), transfer gate 109 turns off and transfer gates 63, 101, 103, 105, and 107 turn on. Similarly, with reference to FIG. 4, for this change of count, transfer gate 89 turns off, and transfer gates 43, 81, 83, 85, and 87 turn on.

As will be explained more fully below in describing the logic level diagrams of multi-state controller 19, any change in the count input of a given delay stage occurs while the input pulse signal for the given delay stage is high. Thus, at the time of the exemplary change of adjustment count from decimal 32 to decimal 31, the potential at node 37 in sub-stage 31 is low and the potential at node 57 in sub-stage 33 is high. Because the n-type MOSFETs 51 and 51A through 51D have been held on up until the change in the input count, the fact that five transfer gates turn on essentially simultaneously does not cause any problem within sub-stage 31. Similarly, because the p-type MOSFETs 70 and 70A through 70D have been held on up until the change in the input count, the fact that five transfer gates turn on essentially simultaneously does not cause any problem within sub-stage 33.

The total capacitive loading of a sub-stage node (node 37 in FIG. 4, node 57 in FIG 5) comprises a minimum, generally fixed, capacitance designated herein as $C_0$, and a discretely adjustable capacitance designated herein as $nC_u$ where n is the adjustment count and $C_u$ is the per unit input capacitance of the p-type MOSFETs used in the subsets.

The nominal value for the per unit capacitance $C_u$ is in the neighborhood of 40 femtofarads. Even assuming worst case conditions for device tolerances and temperature variations, the stage delay as a function of count can reliably be adjusted to change from a minimum delay of 4.5 nanoseconds to a maximum delay of 7.5 nanoseconds.

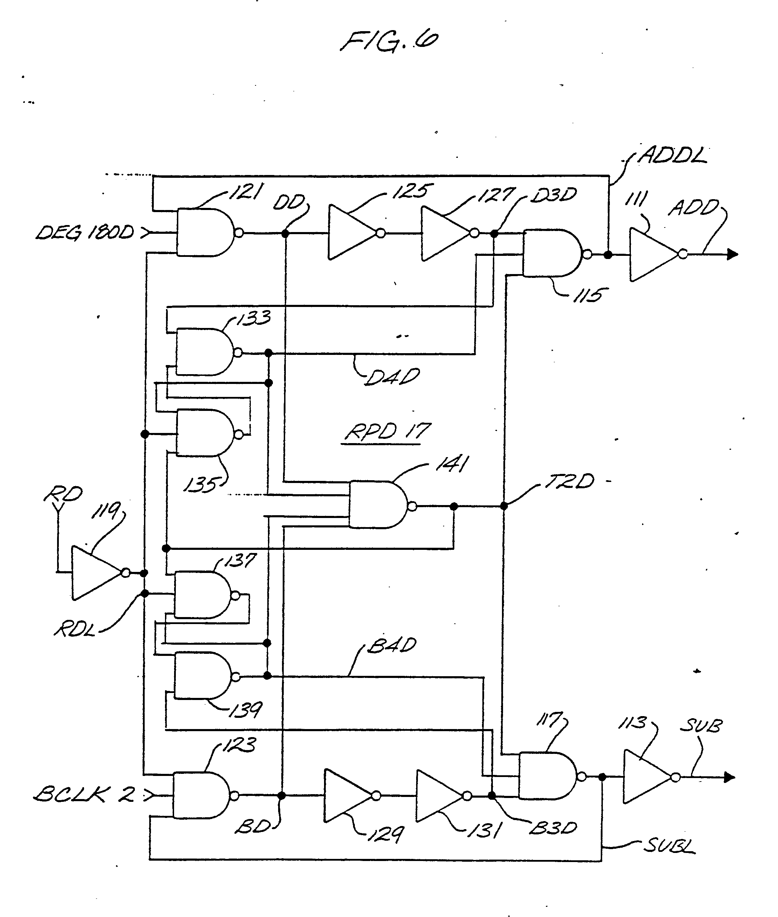

With reference to FIG. 6, there will now be described, at a detailed logic level, the circuitry of RPD 17. In most respects, RPD 17 is generally similar in construction to a phase frequency detector (PFD) shown and described in the above-cited article by Jeong et al. As used in combination with other circuitry of the preferred embodiment, RPD 17 cooperates in operation with such other circuitry in a significantly different way from the way in which the PFD cooperates with a charge pump and loop filter disclosed in the Jeong et al. article.

RPD 17 is held in a reset condition while the RD signal is high. In this reset condition, the ADD signal produced by an inverter 111 is low and the SUB signal produced by an inverter 113 is low. Further, an ADDL signal produced by a NAND gate 115 is high and a SUBL produced by a NAND gate 117 is high.

As will be explained more fully below in describing the logic level diagram of multi-state controller 19, the RD signal is low throughout the evaluation window defined by multi-state controller 19. While the RD signal is low, a RDL signal produced by an inverter 119 is high. At the beginning of the evaluation window, the DEG180D signal is high and the BCLK2 signal is also high. In these circumstances, a DD signal produced by a three-input NAND gate 121 is low and a BD signal produced by a three-input NAND gate 123 is low.

A pair of inverters 125 and 127 are connected in tandem between the output of NAND gate 121 and one of the inputs of NAND gate 115. NAND gate 127 produces a D3D signal that is low at the beginning of the evaluation window.

A pair of inverters 129 and 131 are connected in tandem between the output of NAND gate 123 and one of the inputs of NAND gate 117. NAND gate 131 produces a B3D signal that is low at the beginning of the evaluation window.

A pair of NAND gates 133 and 135 are interconnected in a latch circuit arrangement. NAND gate 133 responds to the D3D signal and produces a D4D signal.

A pair of NAND gates 137 and 139 are interconnected in a latch circuit arrangement. NAND gate 139 responds to the B3D signal and produces a B4D signal.

A four-input NAND gate 141 responds to the DD signal, the D4D signal, the B4D signal, and the BD signal, and produces a T2D signal that is applied to both NAND gate 115 and to NAND gate 117.

There will now be described certain matters concerning the operation of RPD 17. A first matter concerns the reset condition of RPD 17. While the RD signal remains high, certain steady state reset situations prevail. These reset situations prevail regardless of whether the DEG180D signal is high or low, regardless of whether the BCLK2 signal is high or low, and regardless of the recent past history of either the DEG180D signal or the BCLK2 signal. Because the RD remains high, the RDL signal remains low. Because the RDL signal remains low, the DD signal remains high, the output of NAND gate 135 remains high, the output of NAND gate 137 remains high, and the BD signal remains high. Because the DD signal remains high, the D3D signal remains high, and because the BD signal remains high, the B3D signal remains high. Because the D3D signal remains high and the output of NAND gate 135 remains high, the D4D signal remains low. Similarly, because the B3D signal remains high and the output of NAND gate 137 remains high, the B4D signal remains low. As to NAND gate 141, some of its inputs are not high; therefore it causes the T2D signal to remain high. Because the D4D signal remains low, the ADDL signal remains high and the ADD signal remains low. Because the B4D signal remains low, the SUBL signal remains high and the SUB signal remains low.

As a second matter concerning the operation of RPD 17, there will now be described what occurs immediately following the change of the RD signal from high to low, while the DEG180D signal remains high and the BCLK2 signal remains high. For the purpose of this description, the instant at which the RD signal changes from high to low is referred to as $t_0$. Inasmuch as each inverter and each NAND gate has a propagation delay, some time elapses before certain signals change in response to the change of the RD signal at $t_0$. For the purpose of this description, the time following $t_0$ is divided into intervals referred to as "gd's", each gd corresponding to a gate propagation delay. One gd after $t_0$, the RDL signal changes from low to high to cause NAND gate 121 and NAND gate 123 to respond such that two gd's after $t_0$, the DD signal changes from high to low, and the BD signal changes from high to low. Inverters 125 and 127 respond to the change of the DD signal and inverters 129 and 131 respond to the change of the BD signal such that four gd's after $t_0$, the D3D signal changes from high to low, and the B3D signal changes from high to low. NAND gate 133 responds to the change of the D3D signal and NAND gate 137 responds to the change of the B3D signal such that five gd's after $t_0$, the D4D signal changes from low to high and the B4D signal changes from low to high. NAND gate 135 responds to the change of the D4D signal and NAND gate 137 responds to the change of the B4D signal such that six gd's after $t_0$, the output of each of these NAND gates changes from high to low. Throughout the foregoing transient conditions, the T2D signal remains high, the ADDL signal remains high, the ADD signal remains low, the SUBL signal remains high, and the SUB signal remains low.

As a third matter concerning the operation of RPD 17, there will now be described what occurs, during the evaluation window, immediately following the change of the DEG180D signal from high to low, while the BCLK2 signal remains high (i.e., the DEG180D signal leads the BCLK2 signal). For the purpose of this description, the instant at which the DEG180D signal changes from high to low is referred to as $t_i$. One gd after $t_i$, the DD signal changes from low to high. Three gd's after $t_i$, the D3D signal changes from low to high. Whether the change of the D3D signal causes NAND gate 115 to change the ADDL signal depends upon the T2D signal. The T2D signal changes from high to low after both the DEG180D signal and the BCLK2 signal have changed from high to low; more particularly, it does so two gd's after the trailing of the two falling edges. If the T2D signal remains high at least until four gd's have elapsed after $t_i$, the ADDL signal changes from high to low at four gd's after $t_i$. If the T2D signal changes from high to low before four gd's have elapsed after $t_i$, the ADDL signal remains high. If the ADDL signal changes from high to low, then the ADD signal changes from low to high at five gd's after $t_i$.

As to the T2D signal changing from high to low two gd's after the trailing of the two falling edges, this occurs because NAND gate 141 has one gd of propagation delay which follows one gd of propagation delay of the applicable one on NAND gates 121 and 123, one of which is responsive to the lagging signal. Further with respect to the T2D signal, as soon as it changes from high to low it begins to affect NAND gates 135 and 137, which in turn will affect NAND gates 133 and 139, respectively, resulting in a feedback such that the T2D signal remains low for only three gd's.

As a summary and amplification of the foregoing matters concerning the operation of RPD 17, it is maintained in a reset condition until slightly before the beginning of the evaluation window, and at that point both the DEG180D and BCLK2 signals are high. When the RD signal changes to low, there follows a brief transient response of gates within RPD 17; this brief transient response does not affect the ADD and SUB output signals, which remain low. During the evaluation window, the DEG180D signal changes from high to low and the BCLK2 signal also changes from high to low. These changes can occur at the same or approximately the same time (i.e., the difference in time is less than the propagation delay of a single gate); the falling edge of the DEG180D signal can occur first (i.e., the DEG180D signal leads the BCLK2 signal); and the falling edge of the DEG180D signal can occur second (i.e., the DEG180D lags the BCLK2 signal). If the DEG180D signal leads the BCLK2 signal by more than one gd, the ADD signal changes from low to high as described in detail above. The symmetrical arrangement of gates within RPD 17 is such that if the DEG180D signal lags the BCLK2 signal by more than one gd, the SUB signal changes from low to high for the same reasons as described in detail above with respect to the ADD signal.

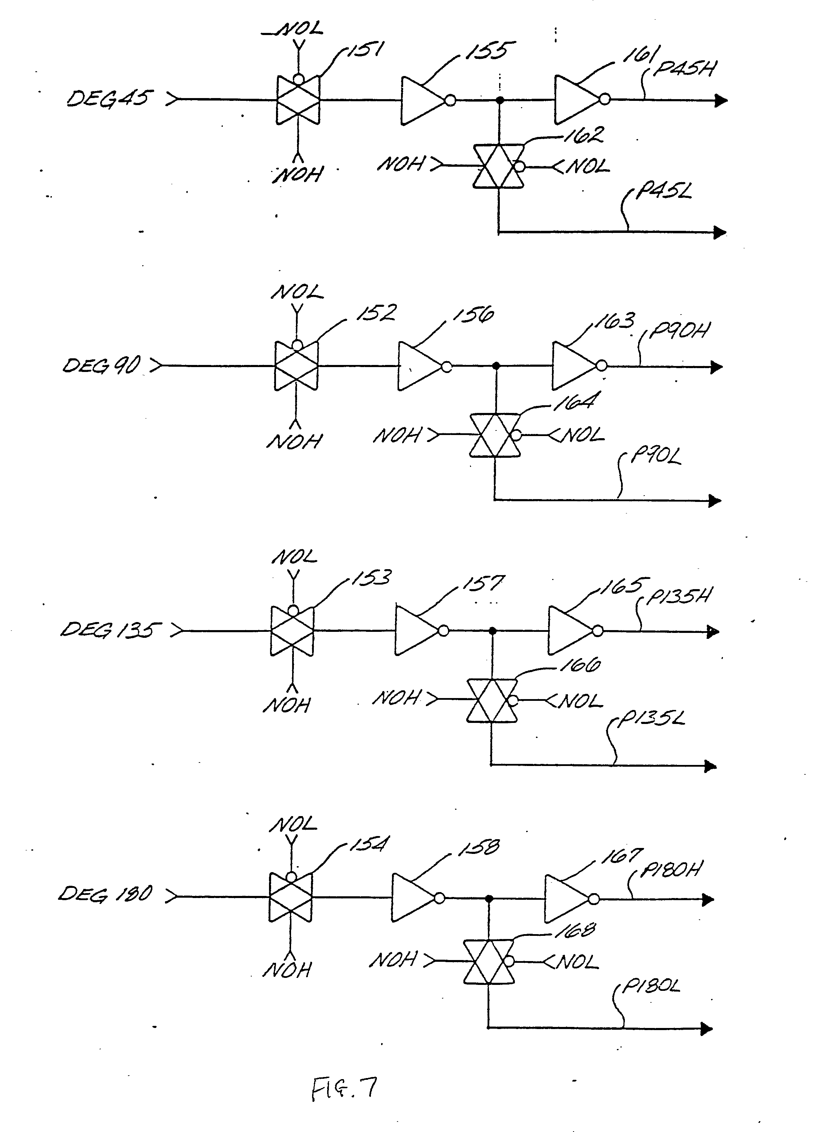

With reference to FIG. 7, there will now be described a portion of the circuitry within decoder 25. In normal operation, a NOH signal is high and a NOL signal is low, and these signals turn on four transfer gates 151, 152, 153, and 154. With these transfer gates being turned on, the DEG45, DEG90, DEG135, and DEG180 signals propagate to inverters 155, 156, 157, and 158, respectively. For testing purposes, other transfer gates are suitably provided for multiplexing test signals into these inverters.

Inverter 155 drives an inverter 161 and a transfer gate 162. Inverter 161 produces a P45H signal. In normal operation, transfer gate 162 produces a P45L signal. The P45H and P45L signals are complementary signals.

Inverter 156 drives an inverter 163 and a transfer gate 164. Inverter 163 produces a P90H signal. In normal operation, transfer gate 164 produces a P90L signal. P90H and P90L signals are complementary signals.

Inverter 157 drives an inverter 165 and a transfer gate 166. Inverter 165 produces a P135H signal. In normal operation, transfer gate 166 produces a P135L signal. The P135H and P135L signals are complementary signals.

Inverter 158 drives an inverter 167 and a transfer gate 168. Inverter 167 produces a P180H signal. In normal operation, transfer gate 168 produces a P180L signal. The P180H and P180L signals are complementary signals. Other transfer gates can be provided so that during a test other signals can be multiplexed in to define the P45L, P90L, P135L, and P180L signals, respectively.

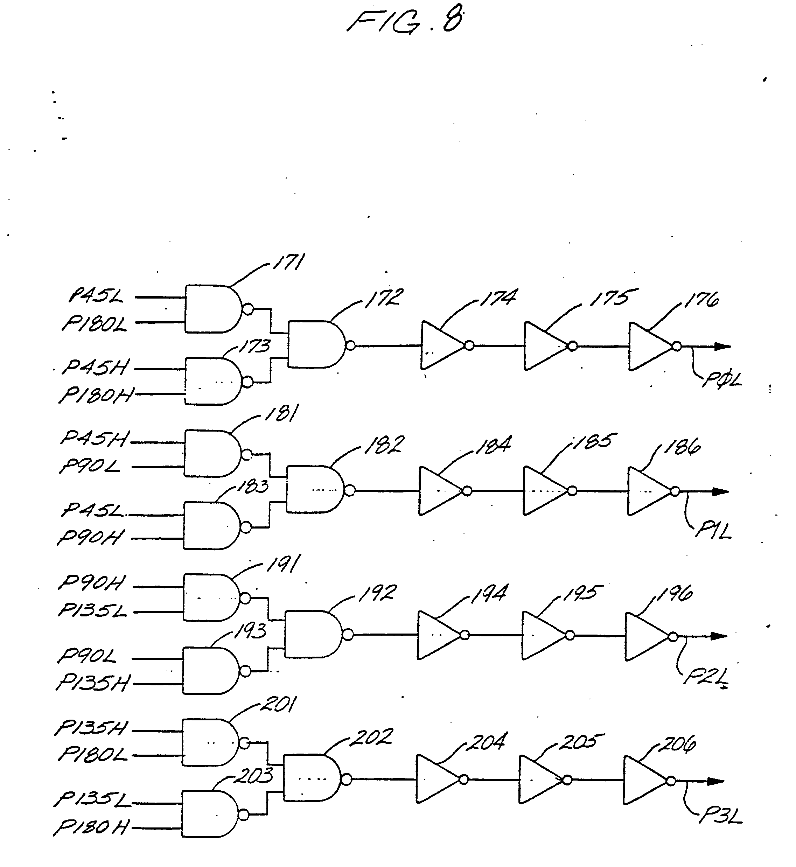

With reference to FIG. 8, there will now be described the remaining portion of the circuitry of decoder 25.

A NAND gate 171 responds to the P45L and P180L signals and drives one input of a NAND gate 172. A NAND gate 173 responds to the P45H and P180H signals and drives the other input of NAND gate 172. Thus, there are two conditions under which the output of NAND gate 172 is high. One such condition is that the P45L and P180L signals are both high. Another such condition is that the P45H and P180H signals are both high. The signal produced by NAND gate 172 propagates through three inverters 174, 175, and 176. The output of inverter 176 defines the POL signal, which is one of the four parallel signals defining the multi-phase clock.

A NAND gate 181 responds to the P45H and P90L signals and drives one input of a NAND gate 182. A NAND gate 183 responds to the P45L and P90H signals and drives the other input of NAND gate 182. Thus, there are two conditions under which the output of NAND gate 182 is high. One condition is that the P45H and P90L signals are both high. The other condition is that the P45L and P90H signals are both high. The output produced by NAND gate 182 propagates through three inverters 184, 185, and 186. The output produced by inverter 186 is the P1L signal.

A NAND gate 191 responds to the P90H and P135L signals and drives one input of a NAND gate 192. A NAND gate 193 responds to the P90L and P135H signals and drives the other input of NAND gate 192. Thus, there are two conditions under which the output of NAND gate 192 is high. One condition is that the P90H and P135L signals are both high. The other condition is that the P90L and P135H signals are both high. The output of NAND gate 192 propagates through three inverters 194, 195, and 196. The output of inverter 196 is the P2L signal.

A NAND gate 201 responds to the P135H and P180L signals and drives one input of a NAND gate 202. A NAND gate 203 responds to the P135L and P180H signals and drives the other input of NAND gate 202. Thus, there are two conditions under which the output of NAND gate 202 is high. One condition is that the P135H and P180L signals are both high. The other condition is that the P135L and P180H signals are both high. The output of NAND gate 202 propagates through three inverters 204, 205, and 206. The output of inverter 206 is the P3L signal.

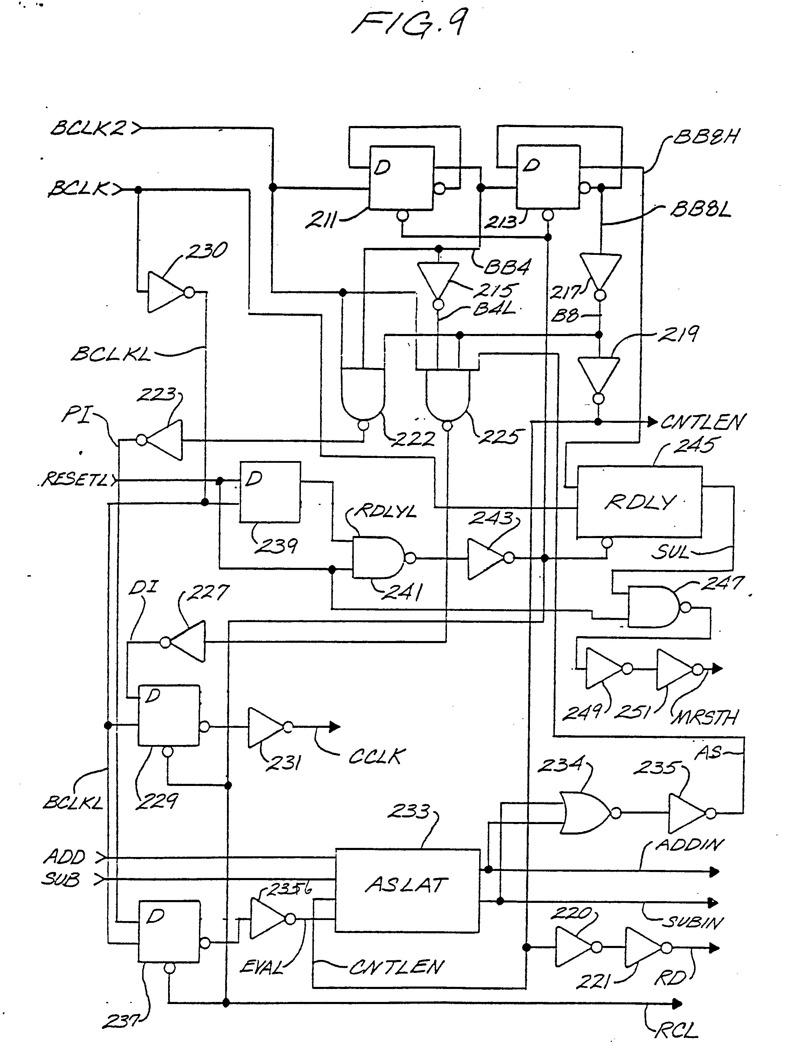

With reference to FIG. 9, there will now be described circuitry for performing functions of multi-state controller 19.

A two-stage frequency divider comprising D-type flip flops 211 and 213 is driven by the BCLK2 signal. Flip flop 211 produces a BB4 signal, and flip flop 213 produces complementary signals, viz, a BB8L signal and a BB8H signal. An inverter 215 inverts the BB4 signal to produce a B4L signal. An inverter 217 inverts the BB8L signal to produce a B8 signal. An inverter 219 inverts the B8 signal to produce the count latch enable signal (CNTLEN). An inverter 220 and an inverter 221 are connected in tandem with inverter 219 such that inverter 221 produces the RD signal and causes it to be high while the CNTLEN signal is high.

Each of several of the foregoing signals completes one loop cycle for every eight cycles of the BCLK signal. These several signals are the BB8H signal, the BB8L signal, the B8 signal, the CNTLEN signal, and the RD signal. During each loop cycle, there is defined a sequence of timing windows.

A NAND gate 222 and inverter 223 are connected in tandem to perform an AND function to produce a

10

PI signal when the BCLK2 signal, the BB4 signal, and the B8 signal are all high.

A NAND gate 225 and an inverter 227 are connected in tandem to perform an AND function to produce a DI signal that is high when the BCLK2 signal, B4L signal, B8 signal, and an AS signal are all high.

The DI signal controls the D input of a D-type flip flop 229 that is clocked by a BCLKL signal produced by an inverter 230 driven by the BCLK signal. An inverter 231 responds to the complementary output of flip flop 229 to produce the CCLK signal that is provided to count accumulator 21.

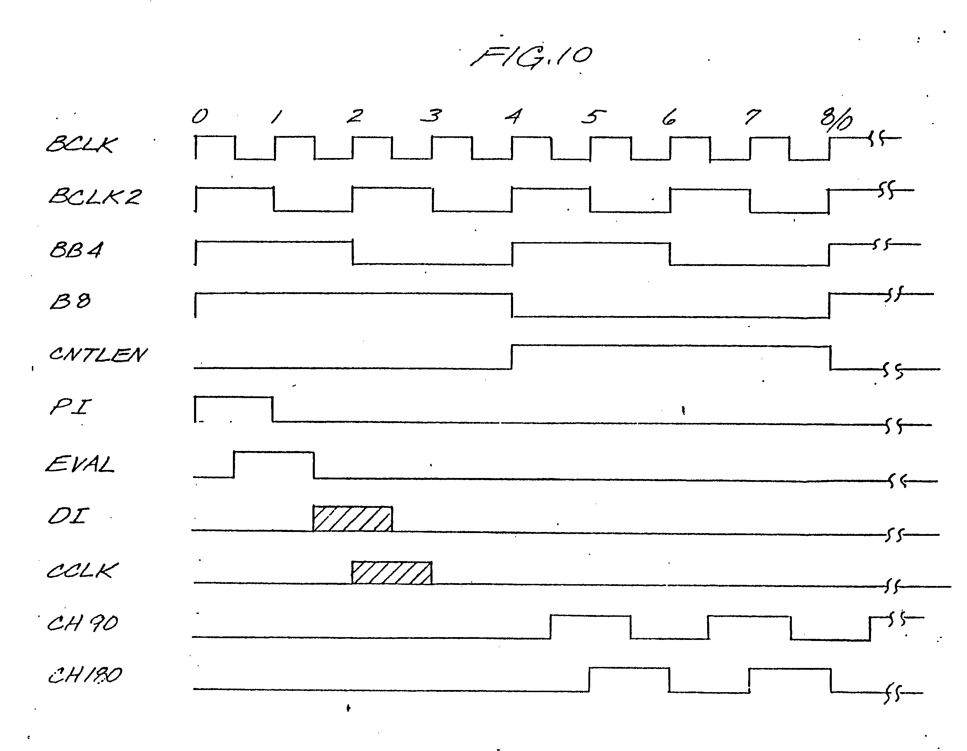

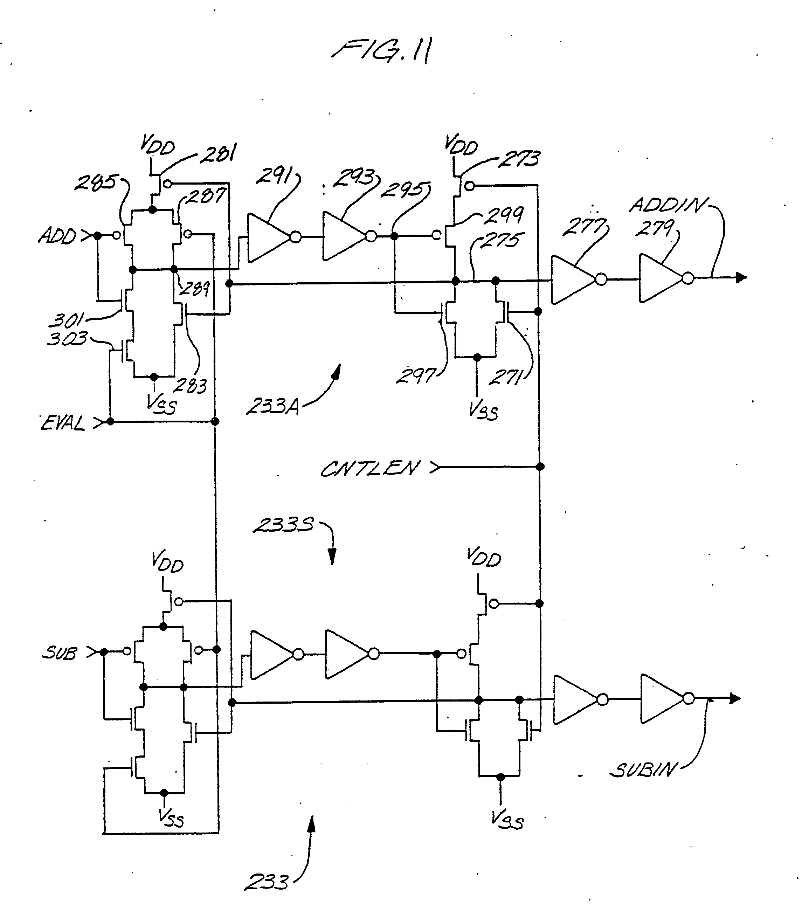

Multi-state controller 19 includes circuitry shown in more detail in FIG. 11 that defines an ADD/SUBTRACT latch (ASLAT 233). Briefly, ASLAT latch 233 is operative during the evaluation window to use the ADD and SUB signals provided by RPD 17 to produce the ADDIN and SUBIN signals that are provided to count accumulator 21. A NOR gate 234 and an inverter 235 are connected to perform an OR function to produce the AS signal such that the AS signal is high whenever either the ADDIN signal is high or the SUBIN signal is high.

ASLAT 233 is controlled by the CNTLEN signal produced by inverter 219 and by an EVAL signal produced by an inverter 236. A D-type flip flop 237 drives inverter 236. The PI signal is applied to the D input of flip flop 237, and the BCLKL signal is used to clock flip flop 237.

Some of the circuitry within multi-state controller 19 performs functions relating to a start-up reset. In this regard, a RESETL signal is produced by circuitry within the instruction processor chip such that this signal is low when power is initially applied to the chip and shortly thereafter is held high.

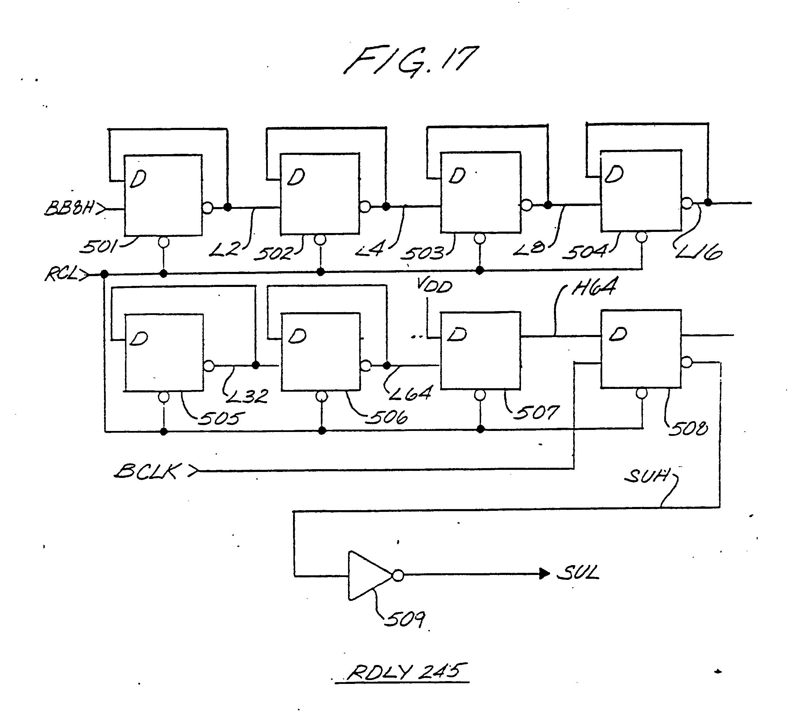

The RESETL signal is applied to the D input of a D-type flip flop 239 which is clocked by the BCLKL signal and which produces an RDLYL signal. A NAND gate 241 is connected in tandem with an inverter 243 to perform an AND function to produce the RCL signal such that the RCL signal is high when both the RDLYL and the RESETL signals are high. While the RCL signal is low, it holds each of the flip flops 211, 213, 229, and 237 in its reset state. Also while the RCL signal is low, it maintains in a clear condition a reset delay circuit arrangement (RDLY 245) that is fully described below with reference to the logic level diagram of FIG. 17. Briefly, RDLY 245 comprises circuitry for producing an SUL signal that is low while the RCL signal is low and that remains low for a predetermined number of loop cycles after the RCL signal changes from low to high. The SUL and RESETL signals are applied to the inputs of a NAND gate 247. The output of NAND gate 247 drives tandem-connected inverters 249 and 251. Inverter 251 produces a MRSTH signal for distribution to other circuitry in the instruction processor.

Reference is now made to the timing diagram of FIG. 10. The timing diagram of FIG. 10 has a time scale to provide for spanning eight clock cycles of the multi-phase clock and depicts general timing relationships involved in each loop cycle. Along its top, FIG. 10 shows general features of the waveform of the BCLK signal, which is externally generated and applied to the chip to determine the clock rate of the multi-phase clock.

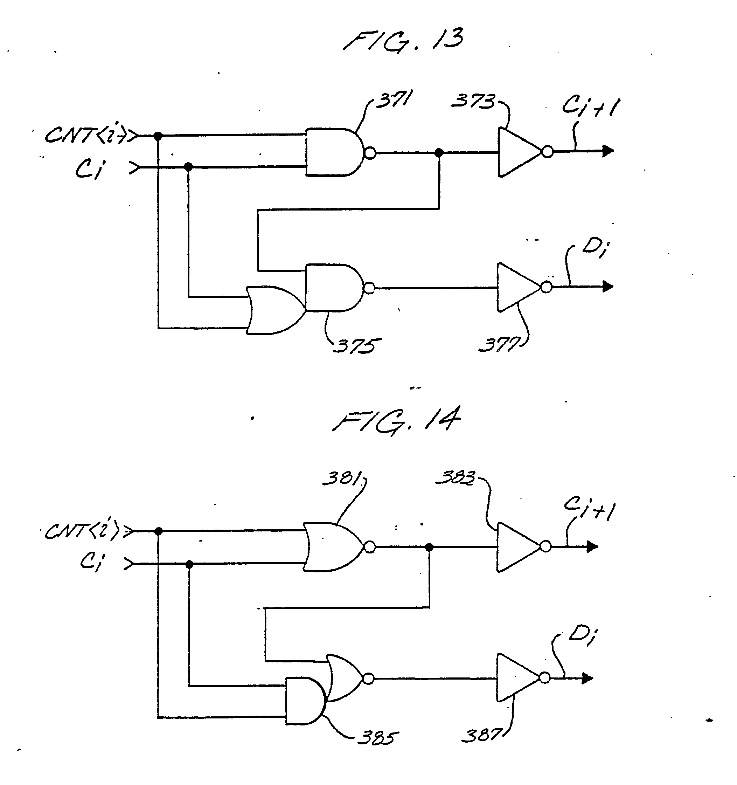

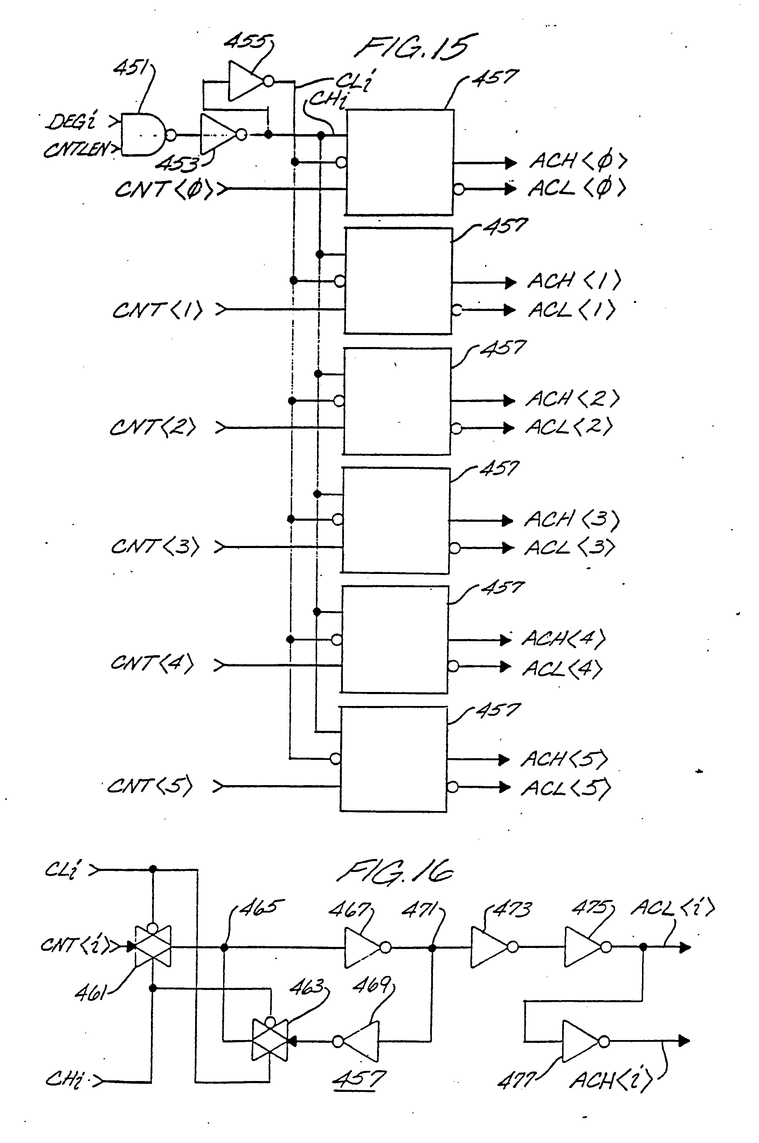

Proceeding from the top of FIG. 10, the next waveform pertains to the BCLK2 signal, which is produced by divide-by-two circuit 5. The next waveform pertains to the BB4 signal, which is produced by flip flop 211. The next waveform pertains to the B8 signal, which is produced by inverter 217 which is driven by flip flop 213. The next waveform pertains to the CNTLEN signal, which is produced by inverter 219. The next waveform pertains to the PI signal, which is produced by inverter 223 which cooperates with NAND gate 222 to perform an AND function such that the PI signal is high only while the BCLK2, BB4, and B8 signals are high. The next waveform pertains to the EVAL signal, which is produced by inverter 236 which is driven by flip flop 237; it is high for one-eighth of the loop cycle. The next waveform pertains to the DI signal, which is produced by inverter 227 which cooperates with NAND gate 225 to perform an AND function such that the DI signal is normally low and becomes high only if the AS signal becomes high; and only during the time while the BCLK2, B4L, and B8 signals are high. The next waveform pertains to the CCLK signal, which is produced by flip flop 237. The CCLK signal is normally low and becomes high only if the DI signal becomes high and then only for one-eighth of the loop cycle. The next two waveforms pertain to two signals (CH90 and CH180) that are produced by circuitry described below with reference to FIGS. 15 and 16. These signals define copying windows during which multi-cell latches within adjustment-count latches 23 copy the CNT<5:0> signal.

With reference to FIG. 11, there will now be described ASLAT 233, which forms part of multi-state controller 19 and which cooperates with RPD 17 during the sample and hold operation. The circuitry shown in FIG. 11 includes circuitry generally indicated at 233A that responds to the ADD signal to produce the ADDIN signal and includes circuitry generally indicated at 233S that responds to the SUB signal to produce the SUBIN signal. The following detailed description of the construction of circuitry 233A applies equally to circuitry 233S.

Circuitry 233A receives the ADD signal from RPD 17 and receives two other signals that are produced by other circuitry within multi-state controller 19 as described above with reference to FIG. 9. These two

11

EP 0 319 761 A2

signals are the CNTLEN signal and the EVAL signal; these signals have a predetermined timing relationship with respect to the loop cycle as depicted in FIG. 10. The CNTLEN signal is low for the initial one-half of the loop cycle and high for the remaining one-half of the loop cycle. The EVAL signal is high only during the evaluation window which spans a portion of the loop cycle, during which the CNTLEN signal is low. At least at the beginning of the evaluation window, the ADD signal is low; it changes to high only during the evaluation window and only if RPD 17 detects that the DEG180D signal leads the BCLK2 signal.

The timing relationships are such that there is a reset interval during which the CNTLEN signal is high and the EVAL signal is low, which reset interval ends when the CNTLEN signal changes from high to low; an ensuing interval during which the CNTLEN and EVAL signals are low, which interval ends when the EVAL signal changes from low to high; an ensuing interval (the evaluation window for sampling) during which the EVAL signal is high and the CNTLEN signal is low, which interval ends when the EVAL signal changes from high to low; and an ensuing interval (a holding interval) during which both the CNTLEN and EVAL signals are low, which interval ends when the CNTLEN signal changes from low to high to repeat the foregoing intervals for the next ensuing loop cycle. With respect to the reset interval, the circuitry of ASLAT 233 has a steady state condition as will now be described. While the CNTLEN signal is high, it causes an n-type MOSFET 271 to be held on and causes a p-type MOSFET 273 to be held off. While MOSFET 271 is on, it holds the potential at a node 275 to be maintained low. This causes an inverter 277 to cause an inverter 279 to cause the ADDIN signal to be maintained low. Further, because the potential at node 275 is maintained low, a p-type MOSFET 281 is maintained on and an n-type MOSFET 283 is maintained off.

During this reset interval, both the ADD and the EVAL signals are low. This causes two p-type MOSFETS, 285 and 287, to be maintained on, and the potential at a node 289 is maintained high. This causes an inverter 291 to cause an inverter 293 to maintain the potential at a node 295 to be high. This causes an n-type MOSFET 297 to be on, and a p-type MOSFET 299 to be off. As indicated by the foregoing, there is a complete signal loop from node 275 through MOSFET 281, MOSFETs 285 and 287, inverter 291, inverter 293, and MOSFET 297, such that a latched reset condition prevails.

At the end of the reset interval, the CNTLEN signal changes from high to low. This change alone has little effect on circuitry 233A; only MOSFETs 271 and 273 change operating conditions, i.e., MOSFET 271 turns off and MOSFET 273 turns on. Otherwise, the circuitry remains latched in a reset condition throughout the ensuing interval. At the end of the ensuing interval, the EVAL signal changes from low to high. This occurs while the ADD signal is low. Because the ADD signal is low, MOSFET 285 remains on. Also, an n-type MOSFET 301 is kept off. The EVAL signal is applied to the gate of an n-type MOSFET 303. Because MOSFET 301 is off, MOSFET 303 cannot pull down the potential at node 289.

During the next interval or evaluation window, there are two possible cases. In one case, the ADD signal remains low; in the other case, it changes from low to high. For the case in which the ADD signal remains low, circuitry 233A remains latched in its reset condition. With respect to the case in which the ADD signal changes from low to high, it can do so for less than the dead-zone threshold interval, or for more than a dead-zone threshold interval. If it does so for less than the threshold, circuitry 233A will remain latched in its reset condition. If it does so for at least the dead-zone threshold, circuitry 233A will be set into a latched condition in which the ADDIN signal is maintained high.

The ADDIN signal does not change throughout the next interval; it is during this interval that the CCLK signal changes from low to high if either the ADDIN signal or the SUBIN signal is high. If the CCLK signal changes from low to high, an integration operation occurs, either to increment or to decrement the register within count accumulator 21.

There will now be described certain matters relating to the dead-zone threshold interval. To trigger the change from the latched reset condition to the latched set condition, it is necessary to turn n-type MOSFET 283 on. For this to occur in response to a positive pulse in the ADD signal, it is first necessary for each of the following to occur. MOSFET 301 must turn on to pull down the potential at node 289 and hold it down long enough for the circuitry to react and cause MOSFET 283 to turn on. The propagation delay of inverters 291 and 293, the propagation delay for MOSFET 299 to turn on, and the propagation delay for MOSFET 283 to turn on, all affect the reaction time. Further, device sizes affect the reaction time. In the preferred embodiment, MOSFET 299 has a relatively wide channel (40 units) and MOSFET 297 has a relatively long channel (5 units). Further, MOSFETs used to define inverter 291 are sized such that the p-type MOSFET in it has a channel width of 20 units, whereas the n-type MOSFET in it has a channel width of 6 units.

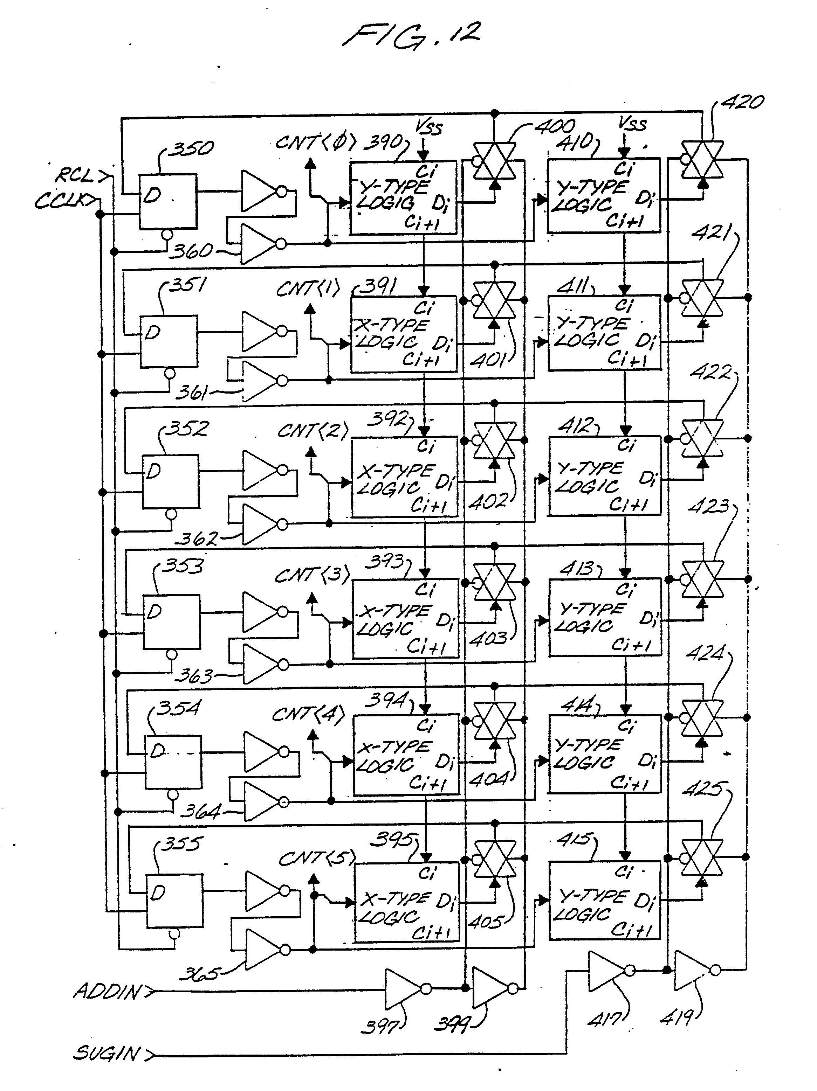

With reference to FIG. 12, there will now be described the overall arrangement of count accumulator 21. A register means in count accumulator 21 comprises six D-type flip flops, 350, 351, 352, 353, 354, and 355. Each of these flip flops drives a pair of tandem-connected buffering inverters. Of these inverters, an inverter 360 produces the CNT<0> signal, inverter 361 produces the CNT<1> signal, inverter 362 produces the CNT<2> signal, inverter 363 produces the CNT<3> signal, inverter 364 produces the CNT<4> signal, and

12

inverter 365 produces the CNT<5> signal.

The RCL signal, while low, holds the register means in a cleared or reset state such that the stored count is decimal 0. The CCLK signal is applied to each of the six flip flops of the register means. While the RCL signal is high, the rising edge of each positive pulse of the CCLK signal causes the count in the register means to change. If the ADDIN signal is high, the positive pulse increments the count. If the SUBIN signal is high, the positive pulse decrements the count.

Count accumulator 21 incorporates two types of circuit arrangements for producing carry signals, etc., that are involved in the incrementing and decrementing of the stored count. These two types are designated herein as an X-type logic (FIG. 13) and Y-type logic (FIG. 14). They are replicated and associated with the bit positions of the register. For generality, the subscript "i" is used in FIGS. 13 and 14 as a variable designating a bit position of the register, i.e. 0 to 5.

With reference to FIG. 13, there will now be described circuitry incorporated within an X-type logic circuit arrangement. A carry-in signal is designated as $C_i$. A carry-out signal is designated $C_{i+1}$. Another output signal is designated as $D_i$; this signal is multiplexed back to the D input of the flip flop for bit i.

The X-type logic circuit arrangement includes a NAND gate 371 and an inverter 373 that are connected to perform an AND function to produce the $C_{i+1}$ signal such that it is high when the CNT<i> and $C_i$ signals are high. That is, the logic equation is:

$C_{i+1}$ = [CNT<i>] * [$C_i$].

An OR-NAND gating arrangement 375 is provided to cause an inverter 377 to produce the $D_i$ signal in accord with the following logic equation:

$D_i$ = ( [ $\overline{CNT<i>}$ ] * [$C_i$] ) + ( [CNT<i>] * [ $\overline{C_i}$ ] ).

With reference to FIG. 14, there will now be described circuitry incorporated within a Y-type logic circuit arrangement. Like the X-type logic arrangement, the Y- type gating arrangement receives a carry-in signal for a flip flop and a bit signal from that flip flop. The outputs of the Y-type logic arrangement are a carry-out signal ($C_{i+1}$) and a $D_i$ signal.

The Y-type logic circuit arrangement includes a NOR gate 381 and an inverter 383 that are connected to perform an OR function to produce the $C_{i+1}$ signal such that it is high when either the CNT<i> signal or the $C_i$ signal is high. That is, the logic equation is:

$C_{i+1}$ = [CNT<i>] + [$C_i$].

An AND-NOR gating arrangement 385 is provided to cause an inverter 387 to produce the $D_i$ signal in accord with the following logic equation:

$D_i$ = ( [CNT<i>] * [$C_i$] ) + ( [ $\overline{CNT<i>}$ ] * [ $\overline{C_i}$ ] ).

With reference again to FIG. 12, a Y-type logic arrangement 390 is associated with flip flop 350, the state of which defines the least significant bit of the register means. The carry-in input for arrangement 390 is maintained low via a connection to $V_{SS}$. The carry-out output is applied to the carry-in input of an X-type arrangement 391 associated with flip flop 351. The carry-out output of arrangement 391 is applied to the carry-in input of an X-type arrangement 392 associated with flip flop 352. The carry-out output of arrangement 392 is applied to the carry-in input of an X-type arrangement 393 associated with flip flop 353. The carry-out output of arrangement 393 is applied to the carry-in input of an X-type arrangement 394 associated with flip flop 354. The carry-out output of arrangement 394 is applied to the carry-in input of an X-type arrangement 395 associated with flip flop 355.

While the ADDIN signal is high, it causes two inverters 397 and 399 to cause six transfer gates, 400, 401, 402, 403, 404, and 405, to turn on. These transfer gates provide parallel, gated feedback paths from the D outputs of logic arrangements 390-395 to the D inputs of flip flops 350-355, respectively.

A Y-type logic arrangement 410 is associated with flip flop 350. The carry-in input for arrangement 410 is maintained low via a connection to $V_{SS}$. The carry-out output is applied to the carry-in input of arrangement 411. Similarly, the carry-out output of each of the Y-type logic arrangements 411-414 is connected to the carry-in inputs of arrangements 412-415, respectively.

While the SUBIN signal is high, it causes inverters 417 and 419 to cause six transfer gates, 420, 421, 422, 423, 424, and 425, to turn on. While these transfer gates are turned on, they provide parallel feedback paths from the D outputs of logic arrangements 410-415 to the D inputs of flip flops 350-355, respectively.

With reference to FIGS. 15 and 16, there will now be described circuitry incorporated within adjustment count latches 23.

The circuitry shown in FIG. 15 is duplicated to provide a left six-cell latch and a right six-cell latch. Each six-cell latch receives the stored count CNT<5:0> and each receives the CNTLEN signal. The left latch receives the DEG90 signal; the right latch receives the DEG180 signal. For generality, FIG. 15 indicates the latch as receiving a DEGI signal. A NAND gate 451 and an inverter 453 are connected to perform an AND function to produce a signal that for generality is designated as a CHi signal. For the left six-cell latch (where DEGi represents DEG90), CHi represents the CH90 signal, which as shown in the timing diagram of FIG. 10, defines two positive pulses during the latter half of each loop cycle. Each such pulse occurs while the DEG90 and CNTLEN signals are high. For the right six-cell latch (where DEGi represents DEG180), CHi represents the CH180 signal, which as shown in the timing diagram of FIG. 10, defines two positive pulses during the latter half of each loop cycle. Each such pulse occurs while the DEG180 and CNTLEN signals are high. An inverter 455 produces a CLi signal, which is the complement of a CHi signal. The CHi and CLi signals are applied to each of six standard cells 457.

FIG. 16 shows the construction of the standard cell. A transfer gate 461 is on while the CLi signal is low and the CHi signal is high; otherwise, transfer gate 461 is off. A transfer gate 463 is on while transfer gate 461 is off, and is off while transfer gate 461 is on. While transfer gate 461 is on, the input signal CNT<i> propagates to a node 465. While transfer gate 463 is on, inverters 467 and 469 define a latch for keeping a signal on a node 471 constant.

Inverters 473, 475, and 477 are arranged to produce complementary signals, viz, ACH<i> and ACL<i>. The latter pair of signals define a respective bit of the adjustment count that is applied to the delay stages.

With reference FIG. 17, there will now be described circuitry for implementing RDLY arrangement 245. This circuitry includes eight D-type flip flops 501 through 508, and an inverter 509. Each of these eight flip flops is maintained in its reset state while the RCL signal is low.

After the RCL signal changes to high, flip flop 501 toggles on each rising edge of the BB8H signal. The signal produced by flip flop 501 is designated L2. It is high while flip flop 501 is in its reset state. After the RCL signal becomes high, the first ensuing rising edge in the BB8H signal causes a falling edge in the L2 signal. The second ensuing rising edge in the BB8H signal causes a rising edge in the L2 signal. Thereafter, every other rising edge in the BB8H signal (4th, 6th, 8th, etc.) causes a rising edge in the L2 signal.

Flip flop 502 toggles on each rising edge of the L2 signal. The signal produced by flip flop 502 is designated L4. It is high while flip flop 502 is in its reset state. When the second rising edge in the BB8H signal causes a rising edge in the L2 signal, this causes a falling edge in the L4 signal. When the fourth rising edge in the BB8H signal causes another rising edge in the L2 signal, this causes a rising edge in the L4 signal. In other words, the fourth rising edge in the BB8H signal ripples through flip flops 501 and 502. Thereafter, every fourth rising edge in the BB8H signal (8th, 12th, etc.) likewise ripples through to cause a rising edge in both the L2 and L4 signals.

Flip flops 503 through 506 are similarly arranged to provide such ripple-through operation. More particularly, flip flop 503 produces an L8 signal to toggle flip flop 504 on rising edges; flip flop 504 produces an L16 signal to toggle flip flop 505 on rising edges, and flip flop 505 produces an L32 signal to toggle flip flop 506 on rising edges.

Flip flop 506 produces an L64 signal. Its first rising edge occurs when the 64th rising edge in the BB8H signal causes a ripple-through operation from flip flop 501 to flip flop 506. This rising edge in the L64 signal immediately sets flip flop 507 because its D input is maintained high continuously. Flip flop 506 produces a H64 signal which is applied to the D input of flip flop 508. The BCLK signal triggers flip flop 508 so that the rising edge of its output signal (SUH) has a predetermined timing relationship with respect to the BCLK signal independent of the more variable amount of time involved in the ripple-through operation. Inverter 509 inverts the SUH signal to produce the SUL signal.

As indicated by the foregoing, at least 64 loop cycles ensue after the RCL signal becomes high before the SUL signal becomes high. At the outset of this start-up delay interval, the register (flip flops 350-355) in count accumulator 21 store decimal 0. Further, each of the delay circuit stages 7, 9, 11, and 13 provides its minimum delay at the outset of this start-up delay interval. Typically, this minimum delay is less than the delay needed to lock the phase lock loop. That is, the DEG180D signal typically leads the BCLK2 signal at the outset of the start-up delay interval. Typically, as a succession of loop cycles ensue, RPD 17 and ASLAT 233 cooperate to produce a succession of ADDIN pulses, each of which increments the stored count in the register in count accumulator 21. Following each step up in the stored count, the delay circuit stages are adjusted to provide an incrementally longer delay. Eventually, the adjustment is such that the DEG180D and BCLK2 signals are sufficiently close in phase, as detected by RPD 17 and ASLAT 233.

With the DEG180D and BCLK2 signals being in phase, the DEG180 signal leads the BCLK2 signal by an amount determined by the compensation 27. Each of the other phase-boundary-defining signals is similarly affected by compensation 27. On the other hand, the logic circuits in decoder 25 introduce propagation delays between the edges in the phase-boundary-defining signals and the resulting edges in the POL through P3L signals. Thus, compensation 27 constitutes means for introducing a phase-lead component in each phase-boundary-defining signal to provide for balancing a phase-lag component introduced by other circuit means such as the circuit means for producing the parallel pulse signals. Compensation 27 is

14

EP 0 319 761 A2

preferred but not essential. Moreover, each of many specific structures in the above-described preferred embodiment, although preferred, is exemplary of numerous other structures that can constitute equivalents in the context of a combination claimed below.

The features disclosed in the foregoing description, in the following claims and/or in the accompanying drawings may, both separately and in any combination thereof, be material for realising the invention in diverse forms thereof.

## Claims

1. Circuitry for defining a multi-phase clock having a clock rate determined by a reference clock signal, which circuitry is characterised by: a phase locked loop (15) driven by the reference clock signal, the phase locked loop (15) having a feedback path including multi-cell means (21, 23) for providing an accumulated multi-bit adjustment count, and a feed-forward path including a plurality of discretely adjustable delay circuit stages (7,9,11,13) for producing a plurality of phase-boundary-defining signals under control of the accumulated adjustment count; and circuit means (25) responsive to the phase-boundary-defining signals for producing parallel pulse signals that in combination define the multi-phase clock.

2. Circuitry according to claim 1, wherein the number of discretely adjustable delay circuit stages (7,9,11,13) equals the number of phases of the multi-phase clock.

3. Circuitry according to claim 1 or 2, and including a frequency dividing means (5) arranged so that the reference clock signal drives the phase-lock loop (15) through the frequency dividing means, and the frequency dividing means (5) provides to the phase-lock loop a reference pulse signal that has essentially a 50 per cent duty cycle.

4. Circuitry according to any one of claims 1 to 3, wherein the feed forward path includes register means (21) for accumulating a count and multi-cell latch means (23) coupled between the register means and the delay circuit stages (7,9,11,13).

5. Circuitry according to any one of claims 1 to 3, wherein the phase-lock loop (15) includes resettable phase difference detecting means (17) for producing an error signal, register means (21), means (19) for controlling the register means so that there is accumulated in the register means a stored count that is the integral of the error signal, and means (23) for utilizing the stored count to control the adjustable delay circuit stages.

6. Circuitry according to any preceding claim, wherein each delay circuit stage (7,9,11,13) includes means for causing a respective one of the phase-boundary-defining signals to provide a rising edge and a falling edge on an alternating basis, and means for causing an adjustable propagation delay preceding each leading edge to be essentially equal to an adjustable propagation delay preceding each falling edge.

7. Circuitry according to claim 1, wherein the phase-lock loop (15) includes register means (350 to 355) for storing a count, and means (23) for producing separate pulse signals for incrementing and for decrementing the count.

8. Circuitry according to claim 7, wherein the means (23) for producing the separate pulse signals includes a pair of resettable latch circuit arrangements.

9. Circuitry according to any preceding claim, and including means for providing a phase reference signal, wherein the phase-lock loop includes compensation means (27) arranged in the feedback path to introduce a phase-lead component for each phase-boundary-defining signal to provide for balancing a phase-lag component introduced by other circuit means such as the circuit means (25) for producing the parallel pulse signals.

10. Integrated-circuit circuitry for responding to an input parallel signal that defines a count, and to an input serial signal that defines a pulse waveform, to produce an output serial signal that defines a delayed pulse waveform, which circuitry is characterised by: a plurality of circuit elements (71-76) for selectively loading a node (37); multiplexing means (43,81,83,85, 87,89) responsive to the input parallel signal for loading the node with a selected set of the circuit elements; signal propagating circuit means (35) responsive to the input serial signal for driving the node to produce a node signal that undergoes an excursion during an interval that is a staircase function of the number of circuit elements in the selected set; and threshold-setting circuit means (39, 41) responsive to the node signal for producing the output serial signal.

11. Circuitry according to claim 10, wherein each circuit element (71-76) has an input capacitance, and wherein the circuitry includes means for establishing a predetermined voltage across the input capacitance of each circuit element while the circuit element is not selected to load the node.

15

12. Circuitry according to claim 10 or 11, wherein the signal propagating means (39, 41) has an output resistance, and wherein each circuit element (71-76) has an input capacitance to provide for establishing a time constant that is a staircase function of the number of circuit elements in the selected set.

13. Circuitry for a discretely adjustable delay stage to provide for responding to a stage-input parallel signal that defines a count, and to an stage-input serial signal that defines a pulse waveform, to produce a stage-output serial signal that defines a delayed pulse waveform, which circuitry is characterised by: first and second sub-stages (31, 33), each being responsive to a sub-stage input serial signal and producing a sub-stage output serial signal; the sub-stage input serial signals for the first (31) and second (33) sub-stages being the stage-input serial signal and the first sub-stage output serial signal, respectively, and the sub-stage output serial signal for the second sub-stage being the stage-output serial signal; and each sub-stage comprising: a plurality of sub-stage circuit elements (71-76 or 91-96) for selectively loading a sub-stage timing-signal node (37 or 57); sub-stage multiplexing means (43, 81, 83, 85, 87 or 63, 101, 103, 105, 107, 109) responsive to the input parallel signal for loading the sub-stage timing-signal node with a selected set of the sub-stage circuit elements; sub-stage signal propagating circuit means (35 or 55) responsive to the input serial signal for driving the node to produce a sub-stage timing signal that undergoes an excursion during an interval that is a staircase function of the number of sub-stage circuit elements in the selected set; and sub-stage threshold-setting circuit means (39, 41 or 59, 61) responsive to the sub-stage timing signal for producing the sub-stage output serial signal.

14. Circuitry according to claim 13, wherein each sub-stage provides signal-inversion, and wherein the sub-stages have means for providing that the delay from an edge of the stage-input serial signal to the resulting edge of the stage-output serial signal is essentially the same for rising and falling edges.

15. Circuitry according to claim 13 or 14, wherein each circuit element has an input capacitance, and wherein the circuitry includes means (51 or 70) for establishing a predetermined voltage across the input capacitance of each circuit element while the circuit element is not selected to load the node.

16. Circuitry according to claim 13 or 14, wherein the signal propagating means has an output resistance, and wherein each circuit element has an input capacitance to provide for establishing a time constant that is a staircase function of the number of circuit elements in the selected set.

17. Circuitry for defining a multi-phase clock, which is characterised by: circuit means for producing a phase-reference pulse signal; delay-circuit means (7, 9, 11, 13); storage means (21) having input means operable to integrate an error signal to produce a stored-delay-control signal, and having output means (23) for providing the stored-delay-control signal; the delay-circuit means being activated by the phase-reference pulse signal and controlled by the stored-delay-control signal to produce a plurality of time-staggered pulse signals including a feedback pulse signal; phase-error-determining means including phase-difference-detecting means (17) operable to compare the phase-reference pulse signal with the feedback pulse signal to produce a sampled error signal, and holding means (233) for providing the sampled error signal to the input means of the storage means; multi-state controller means (19) comprising means (236) for defining a sequence of timing windows including an evaluation window and an integration window, and comprising means (221) for operating the phase-difference-detecting means during the evaluation window, and means (231) for operating the input means of the storage means during the integration window: and circuit means (25) responsive to a plurality of the time-staggered pulse signals for producing parallel pulse signals that in combination define the multi-phase clock.

18. Circuitry according to claim 17, wherein the delay-circuit means includes a plurality of discretely adjustable delay circuit stages (7, 9, 11, 13) for producing the plurality of time-staggered pulse signals.

19. Circuitry according to claim 18, wherein each delay circuit stage (7, 9, 11, 13) includes means for causing a respective one of the time-staggered pulse signals to provide a rising edge and a falling edge on an alternating basis, and means for causing an adjustable propagation delay preceding each leading edge to be essentially equal to an adjustable propagation delay preceding each falling edge.

20. Circuitry according to any one of claims 17 to 19, wherein the delay circuit means includes a plurality of MOSFETs, each having an input capacitance, and means for selecting a coefficient number of the MOSFETs to establish a time constant for staggering the pulse signals such that the feedback signal has a predetermined phase relationship with the phase-reference signal.

21. Circuitry according to any one of claims 17 to 20, wherein the circuitry for producing the phase-reference pulse signal comprises frequency-divider means (5) for causing the phase-reference pulse signal to have an essentially 50 per cent duty cycle.

22. Circuitry according to any one of claims 17 to 21, wherein the circuitry for producing the phase-reference signal has an input connected to a pin of an integrated circuit to receive an externally generated clock signal that determines the rate of the multi-phase clock, and wherein all of the circuitry for producing the multi-phase clock at the determined rate is contained in the integrated circuit.

23. Circuitry according to claim 22, wherein the integrated circuit is implemented in CMOS technology.

FIG.1

FIG. 2

FIG. 3

FIG. 4

FIG. 5

EP 0 319 761 A2

FIG. 6

FIG. 7

FIG. 8

# FIG.9

FIG.10

FIG. 11

FIG. 12

# FIG. 13

CNT⟨i⟩

$C_i$

371

373

$C_{i+1}$

375

377

$D_i$

# FIG. 14

CNT⟨i⟩

$C_i$

381

383

$C_{i+1}$

385

387

$D_i$

FIG.15

FIG.16

# FIG. 17

RDLY 245